# EUROPEAN PATENT APPLICATION

(11) **EP 4 197 330 A1**
(43) Date of publication of application: **21.06.2023**
(21) Application number: 23153807.5
(22) Date of filing: 11.10.2017
(51) Int. Cl.: A01N 31/02, A01N 37/02, A01N 63/20, A01P 3/00

(54) **BIOCONTROL OF FUNGAL PHYTOPATHOGENS BY BACTERIAL VOLATILE ORGANIC COMPOUNDS**

(30) Priority: 17.10.2016 US 201662409132 P
(62) Divisional of application: 17788311.3
(71) Applicant: King Abdullah University of Science and Technology, Thuwal 23955 (SA); Universita' degli Studi di Milano, 20122 Milano (IT)
(72) Inventor: DAFFONCHIO, Daniele Giuseppe, 23955-6900 Thuwal (SA); MARASCO, Ramona, 23955-6900 Thuwal (SA); SOUSSI, Asma, 23955-6900 Thuwal (SA); ROLLI, Eleonora, 20133 MILAN (IT)
(74) Representative: Ipsilon

(57) **Abstract**

The invention provides novel methods of suppressing fungal infection or disease in plants and plant tissue, by exposing or treating plants with an effective amount of one or more volatile organic compounds. The invention also provides novel methods of inhibiting melanin production or pigmentation in phytopathogenic fungi, including fungi causing disease in rice, including fungi causing Rice Blast Disease. The invention further provides novel volatile organic compounds that are bacteria-derived or synthetic equivalents or counterparts of bacteria-derived volatile organic compounds.

## Description

### BACKGROUND

Under the current rapid human population increase, achieving sufficient crop production to satisfy the global food needs will be a significant universal challenge. To satisfy the increasing demand for food and to confront rising global agricultural challenges (seeds and soils quality, water availability and pest management), solutions are needed to increase crop yields without affecting agriculture sustainability.

### SUMMARY

The invention provides methods of biocontrol of fungal infections in plants and plant tissue.

The invention provides, in certain embodiments, methods of inhibiting melanin biosynthesis in phytopathogenic fungi, comprising exposing phytopathogenic fungi to an effective amount of one or more volatile organic compounds, wherein the synthesis of melanin in phytopathogenic fungi exposed to the one or more volatile organic compounds is decreased relative to the synthesis of melanin in phytopathogenic fungi not exposed to the one or more volatile organic compounds.

In other embodiments, the invention provides methods of suppressing fungal infection in plants, comprising exposing said plants to an effective amount of one or more volatile organic compounds, wherein the plant is also exposed to one of more phytopathogenic fungi, wherein said exposure to one or more volatile organic compounds suppresses the virulence of said fungi in said plants.

In other embodiments, the invention provides novel volatile organic compounds. The novel volatile organic compounds are derived from bacteria, such as, but not limited to *Citrobacter* or *Enterobacter.* In still other embodiments, the novel volatile organic compounds are synthetic counterparts or equivalents to volatile organic compounds derived from bacteria.

In certain embodiments, the phytopathogenic fungi are of the *Magnaporthe* genus. In other embodiments, the plants are of the *Oryza* genus.

The details of one or more examples are set forth in the description below. Other features, objects, and advantages will be apparent from the description and from the claims.

### BRIEF DESCRIPTION OF DRAWINGS

This written disclosure describes illustrative embodiments that are non-limiting and non-exhaustive. In the drawings, which are not necessarily drawn to scale, like numerals describe substantially similar components throughout the several views. Like numerals having different letter suffixes represent different instances of substantially similar components. The drawings illustrate generally, by way of example, but not by way of limitation, various embodiments discussed in the present document.

Reference is made to illustrative embodiments that are depicted in the figures, in which:

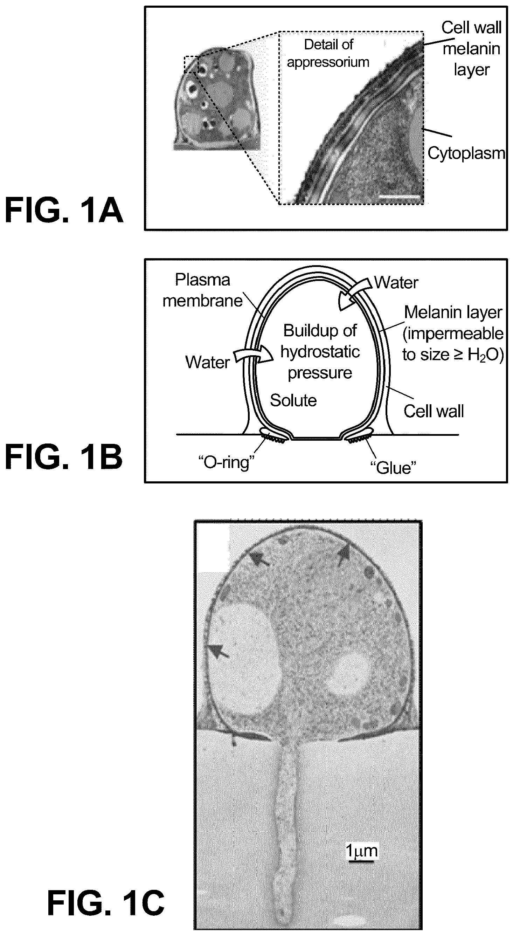

**FIG. 1****: Localization and functional role of melanin in the appressorium.** (**FIG. 1A**) Transmission electron micrograph of a transverse section of an appressorium. The inset shows the melanin layer in the mature appressorium cell wall (Reproduced from Wilson and Talbot 2009). (**FIG. 1B**) By synthetizing melanin, the pore size of the appressoria wall is reduced (<1 nm), thus large molecules such as osmotically active compounds (e.g. glycerol) are unable to cross the plasma membrane and the cell wall. However, water is taken up, generating a high turgor pressure that is translated into a mechanical force at the base of the appressoria (Modified from Howard et al. 1991) (**FIG. 1C**) Penetration of the appressoria through the epidermal cuticle of the host cell, facilitated by the generation of the enormous turgor pressure that exceeds 8 MPa (Modified from Howard et al. 1991) (The line in the photo indicates a scale of 1µm).

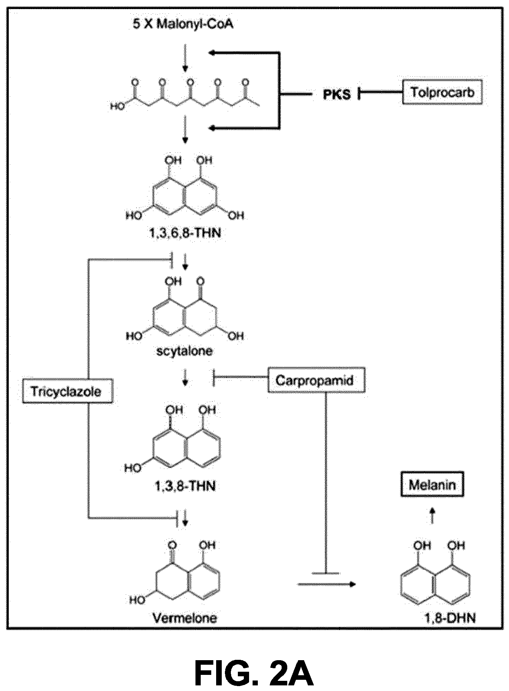

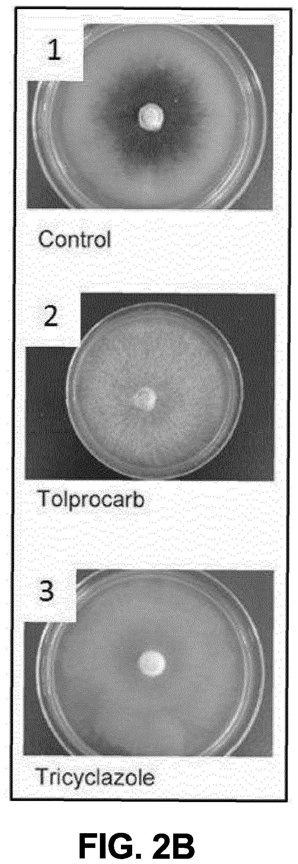

**FIG. 2****: DHN Melanin biosynthesis pathway and mode of action of melanin inhibitors. (****FIG. 2A****)** Fungal melanin biosynthetic pathway initiates from pentaketide synthesis and cyclization to form 1,3,6,8-tetrahydroxynaphthalene (1,3,6,8-THN) via the polyketide synthase (PKS). Then, the 1,3,6,8-THN is reduced to scytalone that is dehydrated to 1,3,8-trihydroxynaphthalene (1,3,8-THN). This step is followed by the reduction of 1,3,8-THN to vermelone which is dehydrated to 1,8-dihydroxynaphthalene (1,8-DHN) that is polymerized and oxidized to yield melanin. Conventional Melanin Biosynthesis Inhibitors (cMBIs) is a group of compounds that specifically prevent melanin biosynthesis in phytopathogens, has long been used for practical control of plant disease. These cMBIs inhibit the penetration of the phytopathogen into intact host plants by preventing the accumulation of 1,8-DHN-melanin in the appressoria although they barely inhibit mycelial growth, spore germination, and/or appressoria formation of fungi. The mode of action of three cMBIs, including Tolprocab, Carpropamid and Tricyclazole are reported. Tolprocab inhibits the synthesis of Polyketide Synthase (PKS) protein that catalyzes pentaketide synthesis and cyclization steps at the upper site of the pathway. Both fungicides Tricyclazole and Carpropamid interrupt dehydration and reduction steps, respectively. Tricyclazole inhibits the two reduction steps between 1,3,6,8-THN and scytalone and between 1,3,8-THN and vermelone. Carpropamid inhibits the two dehydration steps between scytalone and 1,3,8-THN and between vermelone and 1,8-DHN. (FIG. 2B) Addition of the Toprocab (2) and Tricyclazole (3) to fungal growth media modified the black pigmentation of *M. oryzae* mycelium: the fungal mycelium become white and orange, respectively, due to the inhibition of melanin biosynthesis (Modified from Hamada et al. 2014).

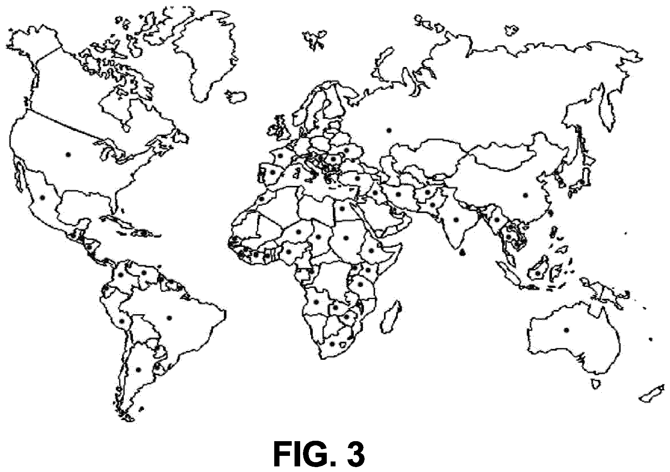

**FIG. 3****: Worldwide distribution of rice blast disease.** Dots show the areas where blast disease has been reported (Reproduced from Wang et al. 2014).

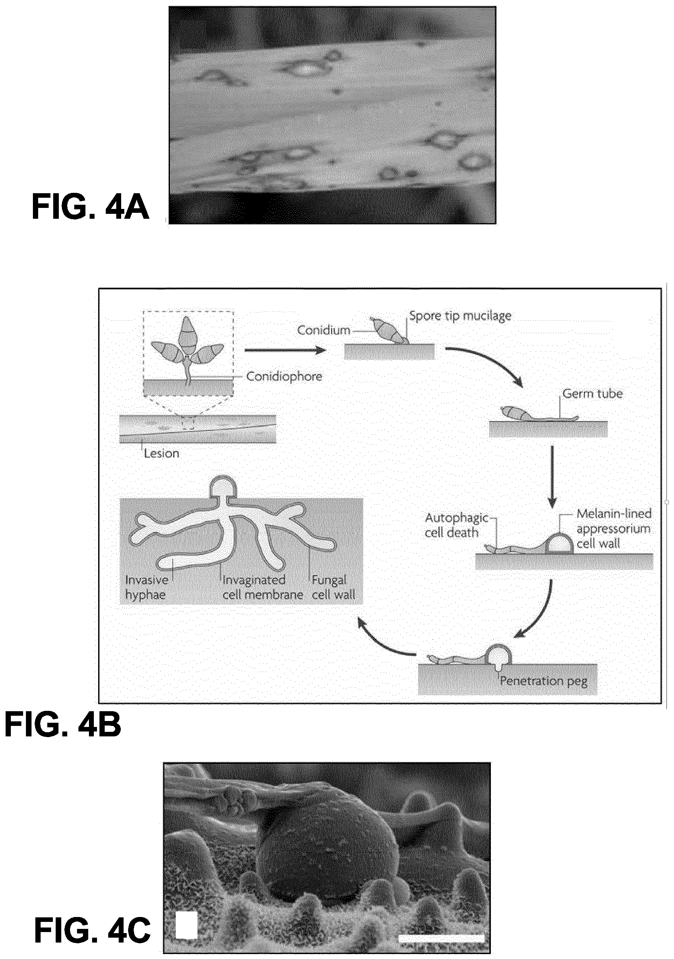

**FIG. 4****: *Magnaporthe oryzae* the causal agent of blast disease. (****FIG. 4A****)** Rice blast affects seedlings, causing a leaf spot infection characterized by large, spreading lesions with a necrotic center and a chlorotic margin. **(****FIG. 4B****)** Life cycle of *M. oryzae.* The rice blast pathogen starts the infection cycle when a three-celled conidium is deposited on the hydrophobic rice cuticle on the leaf surface then germinates under humid conditions. A small germ tube forms then differentiates into a single celled structure, the appressorium. While the appressorium maturates, the conidium collapses and dies in an autophagy process. The appressorium becomes melanized and develops a turgor pressure that is translated into a physical force. Consequently, a narrow penetration peg forms at the base of the appressoria, piercing the cuticle and allowing its penetration into the rice epidermis. (**FIG. 4C**) Scanning electron micrograph of an appressorium on the rice leaf surface. The dome-shaped, single-celled appressorium generates enormous turgor pressure of up to 8 MPa to rupture the rice leaf cuticle (Modified from Wilson and Talbot 2009).

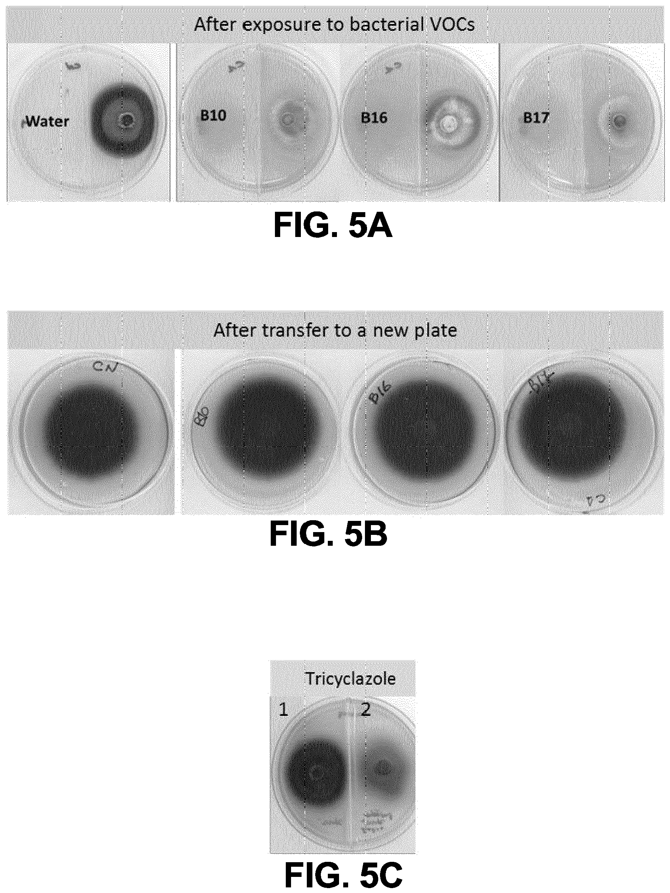

**FIG. 5****: Dual plate assay of *M. oryzae* BOA102 after 7 days of exposure to bacterial VOCs. (****FIG. 5A****)** Four petri dishes containing *M. oryzae* mycelium are shown in FIG. 5A. *M. oryzae* mycelium has been exposed to physiological water (left petri dish) as a negative control and to the VOCs of the three bacterial strains B10, B16 and B17 (after the control, from left to right, respectively). (**FIG. 5B**) Four petri dishes are shown in FIG. 5B. *M. oryzae* plugs from the dual plate assay (from **FIG. 5A**) have been transferred to new Petri dishes containing PDA medium in the absence of bacterial VOCs. (**FIG. 5C**) *M. oryzae* grown on PDA media supplemented with Tricyclazole has been used as positive control to evaluate the phenotype of DHN melanin inhibition in BOA102.

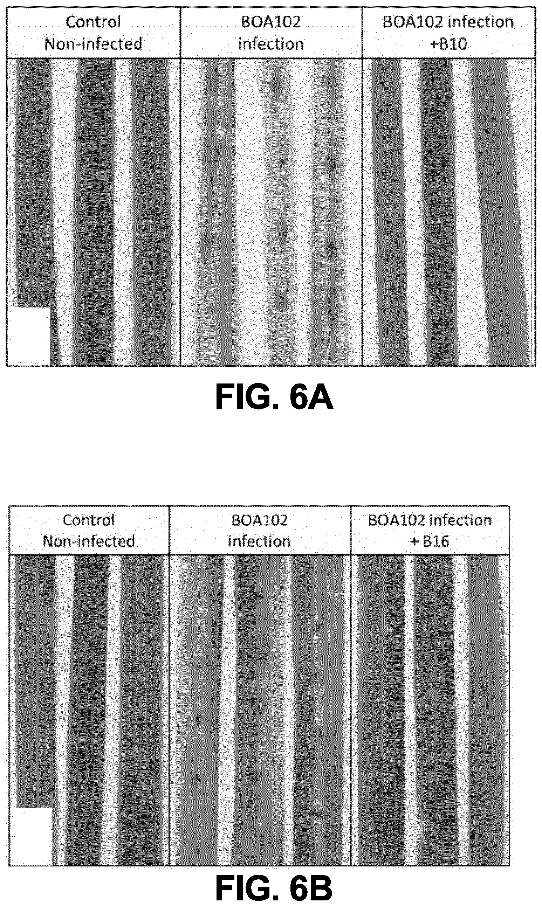

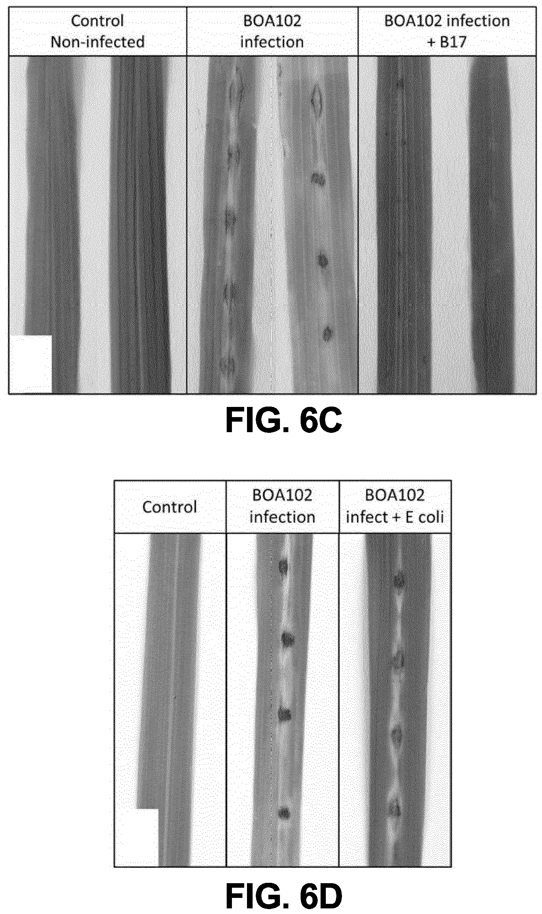

**FIG. 6****: *In vivo* assay to evaluate the effect of bacterial VOCs released by strains B10, B16 and B17 in preventing *M. oryzae* rice leaves infection.** Control non-infected leaves have been used as a technical control in each experiment (left sub-panel in each figure panel). Infected leaves non-exposed to VOCs have been used to evaluate the efficiency of the fungal infection (central sub-panel in each figure panel). Elliptical shaped yellowish lesions with reddish-brown margins and grey-whitish centers typical of the *M. oryzae* infection are observable in all the infected leaves. Infected leaves exposed to strains B 10 (**FIG. 6A**), B16 (**FIG. 6B**) and B17 (**FIG. 6C**) have been used to evaluate the effect of VOCs on BOA102 infection capacity (right sub-panel in each figure panel). Black or dark spots ascribable to *M. oryzae* conidial suspension used for inoculation were observed in all the leaves exposed to the pathogen. No significant infection symptoms typical of *M. oryzae* have been observed in the leaves exposed to the bacterial VOCs. (**FIG. 6D**) Rice leaves exposed to *E. coli* VOCs and infected with the *M. oryzae* conidial suspension showed the typical symptoms of the fungal pathogen infection.

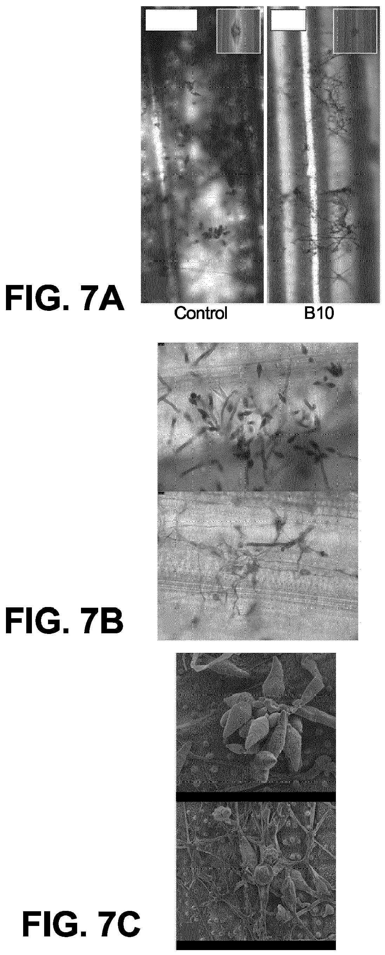

**FIG. 7****: Microscope analysis of rice leaves infected with *M. oryzae* BOA102, exposed or not to B10 bacterial VOCs.** Infected leaves were evaluated six days after treatment. (**FIG. 7A**) Visualization at the optical microscope of infected leaves not exposed (left) and exposed (right) to B 10 VOCs. (**FIG. 7B**) Trypan Blue has been used to stain the fungus on the rice leaves. Infected leaves have been visualized at the optical microscope. Fungal structures on the leaf surface were indicated by the intense blue color, shown in black and white images as black or dark structures. Leaves infected with the fungal conidia but not exposed to bacterial VOCs showed the presence of new conidia and appressoria (upper panel) resulting from the completion of the fungal infection cycle in the leaf tissues (Chattopadhyaya et al.). Leaf exposed to B10 VOCs showed long vegetative hyphae but no novel conidia and appressoria (bottom panel). (**FIG. 7C**) Scanning Electron Microscopy images of rice leaves exposed (bottom panel) or not (upper panel) to bacterial VOCs. New conidia were observed only in the infected leaves not exposed to bacterial VOCs (top panel).

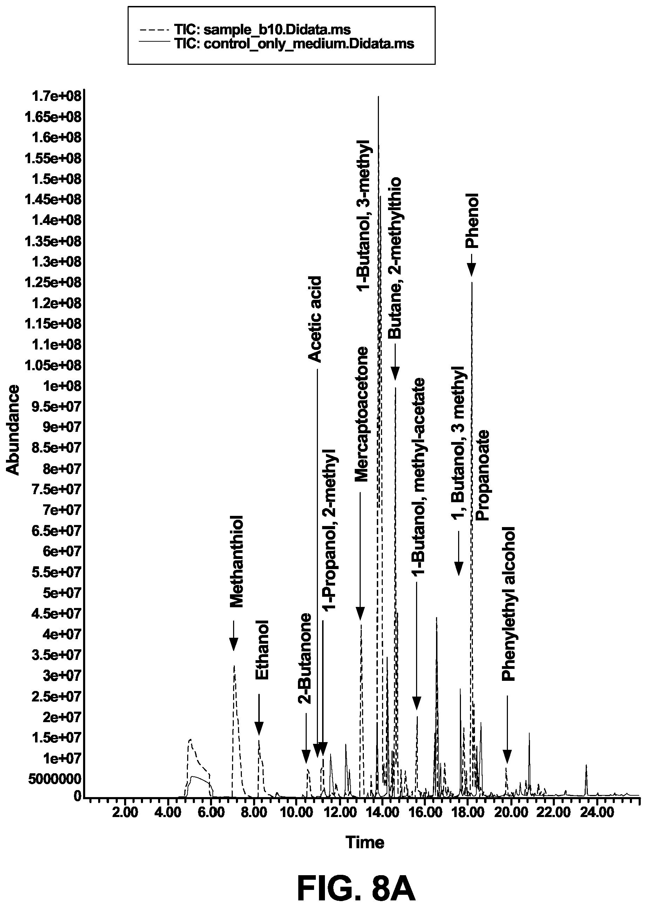

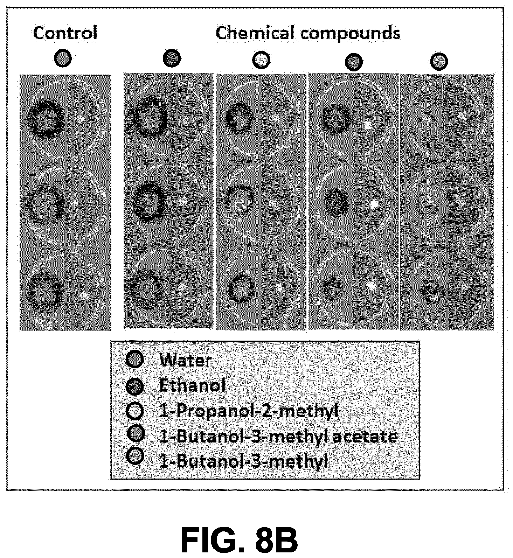

**FIG. 8****:** (**FIG. 8A**) GC-MS profile of VOCs released by the bacterial strain B10 after extraction with a SPME. (**FIG. 8B**) Dual plate assay of *M. oryzae* BOA102 exposed to four bacterial VOCs-commercial-equivalents identified in the headspace of the strains B10 culture. A legend is shown in this figure to indicate the VOCs used.

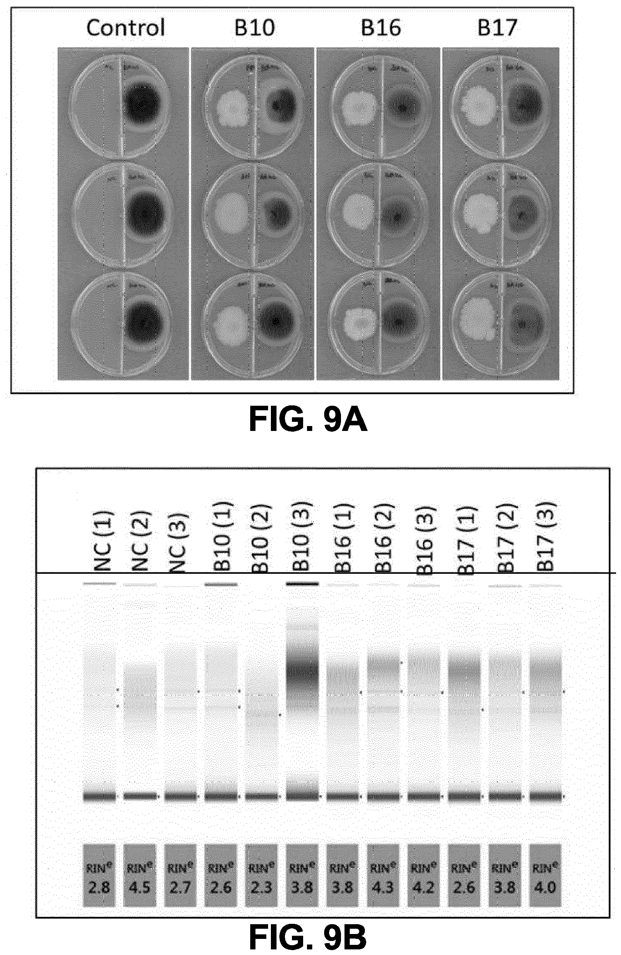

**FIG. 9: (FIG. 9A****)** Dual plate assay confirmation of *M. oryzae* BOA102 exposed to the headspace of physiological saline (control) and exposed to bacterial VOCs released by strains B 10, B16 and B17. Every treatment is repeated three times. **(****FIG. 9B****)** RNA quality assessment using Tape Station 2200 platform. Total RNA is extracted from *M. oryzae* mycelium (from plates shown in **FIG. 9A**). Gel electrophoresis of *M. oryzae* total RNA to evaluate quantity and quality of the obtained RNA is reported. Below each lane RNA Integrity Number equivalent (RINe) are reported over a shaded background.

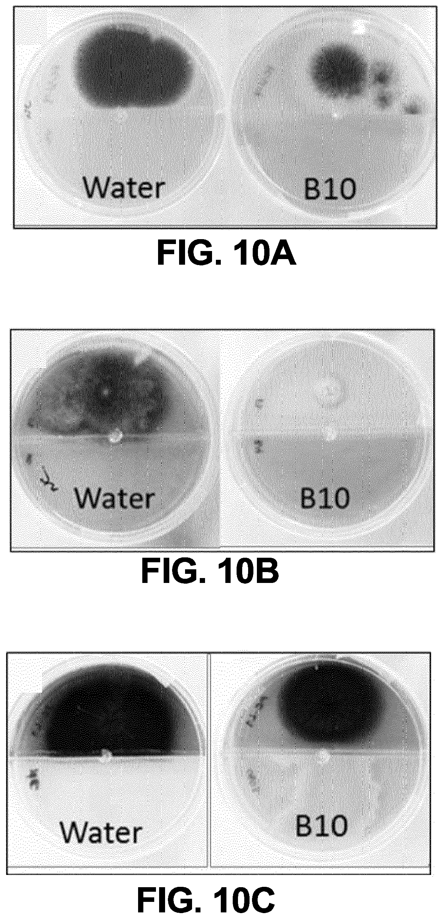

**FIG. 10****: Dual plate assay of three dark phytopathogen fungi exposed for seven days to the headspace of VOCs released by B10.** Physiological saline has been used as negative control. **(****FIG. 10A****)** *Aspergillus japonicus,* **(****FIG. 10B****)** *Aspergillus heteromorphus* and **(****FIG. 10C****)** *Alternaria arborescens* have been used as model organisms for the evaluation of the B 10- VOCs effect on fungal pigmentation.

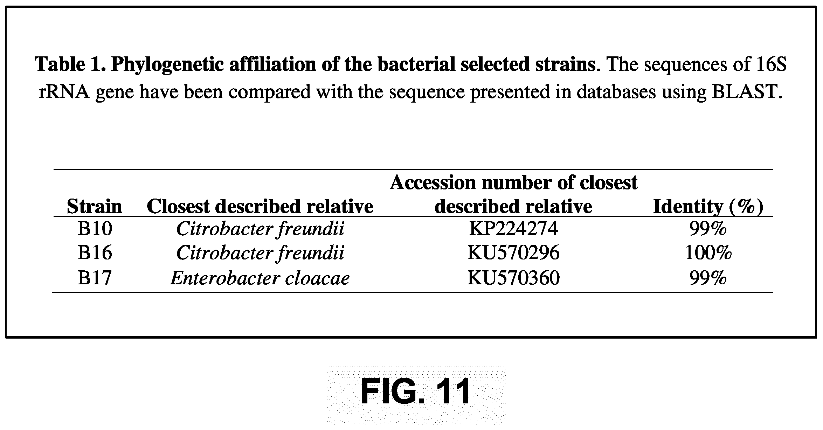

**FIG. 11****: Table 1. Phylogenetic affiliation of the bacterial selected strains.** The sequences of 16S rRNA gene have been compared with the sequence presented in databases using BLAST.

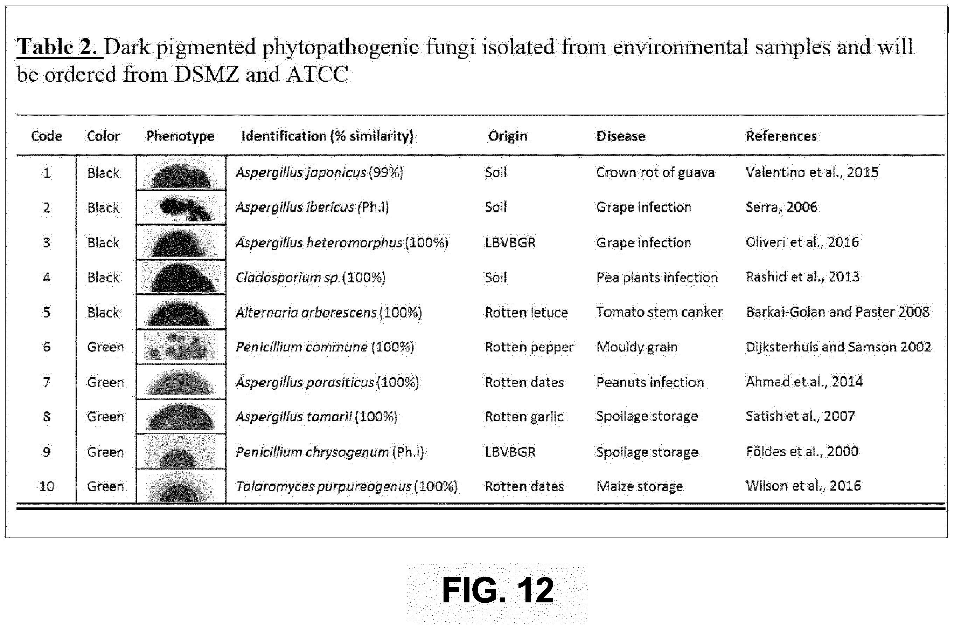

**FIG. 12****: Table 2.** Dark pigmented phytopathogenic fungi isolated from environmental samples and will be ordered from DSMZ and ATCC.

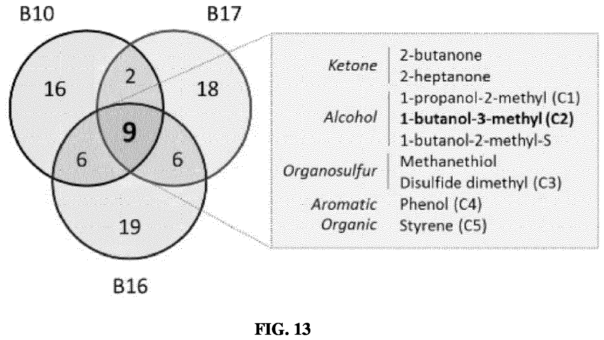

**FIG. 13** shows the Venn diagram of the VOCs released from bacterial strains B10,
   B16 and B 17.

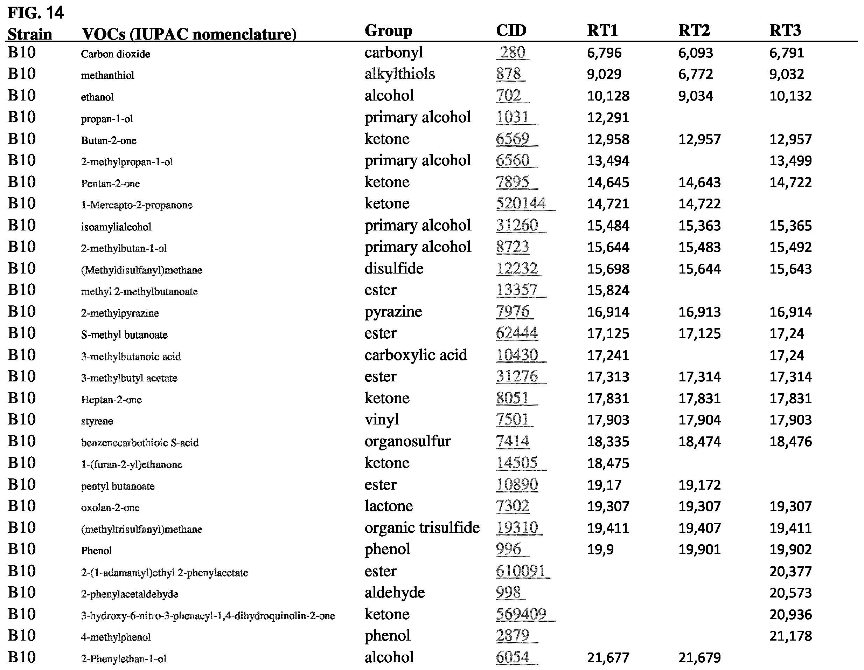

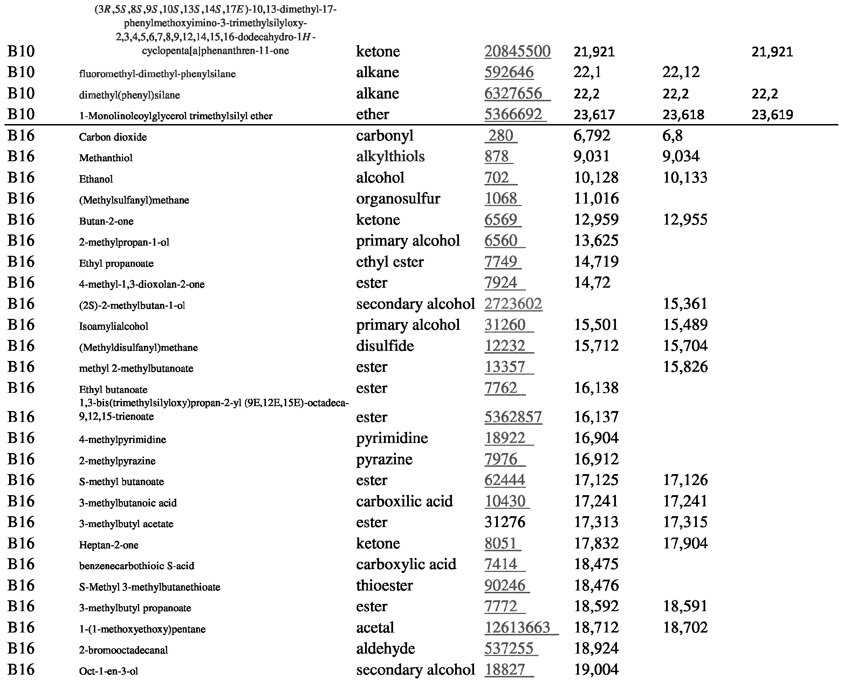

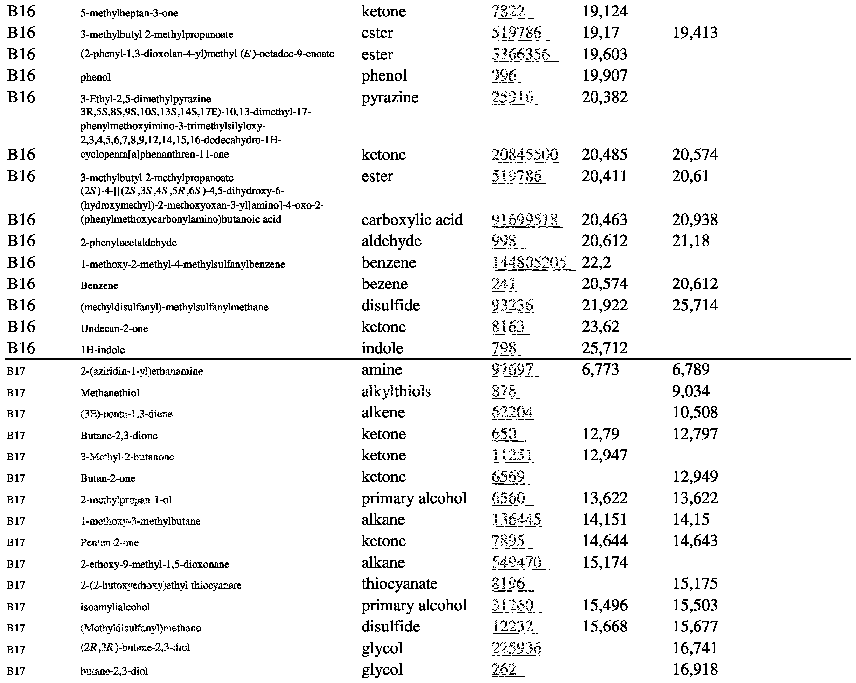

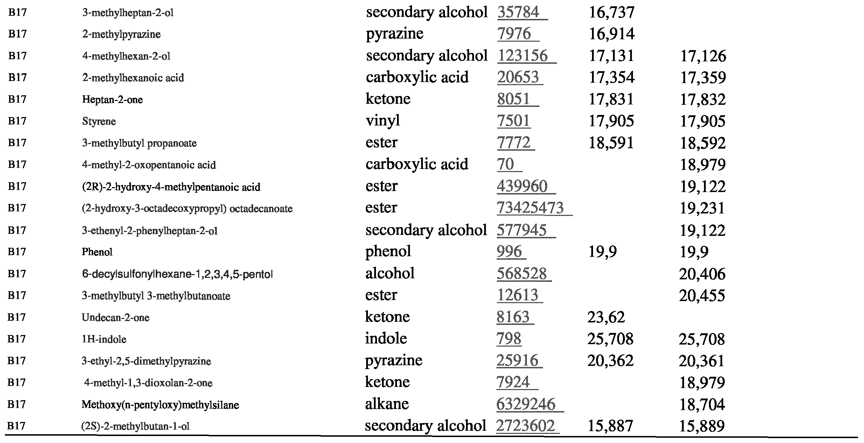

**FIG. 14** shows the identified VOCs from the bacterial strains B10, B16 and B17 along with their IUPAC nomenclature, the compound ID, the chemical functional group and the RT of each compound.

### DETAILED DESCRIPTION

Under the current rapid human population increase, achieving sufficient crop production to satisfy the global food needs will be a big universal challenge. Based on the latest assessments provided by the United Nations Department of Economics and Social Affairs, the 2015 world population was 7.3 billion and is projected to reach 9.7 billion in 2050 (United Nations, 2015). Demand for food is dramatically increasing: it is expected to reach 3 billion tonnes by 2050 for cereals, up from today's nearly 2.1 billion tonnes (FAO, 2009). The most important primary foods produced in 2013, in terms of millions of metric tonnes (Mt), were cereals, in particular maize (1,018 Mt), paddy rice (746 Mt) and wheat (713 Mt) (FAOSTAT, 2015). These three crops account for almost two-thirds of calories consumed globally (Ray et al. 2013). To satisfy this demand of food and confront the rising agricultural challenges (seeds and soils quality, water availability and pest management) more efforts are needed to increase the crop yields without affecting agriculture sustainability (Godfray et al. 2010).

Phytopathogens are one of the most serious dangers in the agricultural sector (Fisher et al 2012). Fungal plant diseases have been estimated to cause total losses ranging from 25% of the crop production in western countries to around 50% in developing countries (Gohel et al. 2006). Until the last decade, synthetic chemical pesticides were considered the only solution to reduce phytopathogen attacks, despite the substantial environmental impact and the selection of resistant population (Edwards 2013). Thus, new and sustainable solutions to control phytopathogenic diseases are necessary.

The use of non-pathogenic microorganisms naturally associated with plants has been described as promising as a biocontrol approach to promote plant growth and control plant disease (Beneduzi et al. 2012). Microorganisms are widespread in all ecosystems where they are key players and provide essential ecological services (Fontaneto 2011). Plants host a huge number of beneficial microorganisms associated with their tissues, among which are bacteria, fungi and archaea (Pii et al. 2015; Zheng et al. 2015). Beneficial Plant Growth Promoting (PGP) bacteria colonize plant root surfaces and, directly or indirectly, improve plant growth by acting as biofertilizer, biostimulator and biocontrol agents (Lugtenberg and Kamilova 2009). PGP bacteria potential studies have been focused on the capacity of these beneficial microorganisms to recolonize plants and improve their growth and tolerance to abiotic/biotic stresses (Parray et al. 2016).

Recently, it has been discovered that Volatile Organic Compounds (VOCs) produced by bacterial metabolism can determine major positive effects on plants (Ryu et al. 2004). It has been demonstrated that bacterial VOCs are involved in many direct and indirect PGP services to plants (Vespermann et al. 2007; Hernández-León et al. 2015; Junker and Tholl 2013).

Applicants have studied the role of bacterial VOCs as biocontrol agents. The effect of the VOCs against a specific category of dark pigmented-phytopathogenic-fungi that require melanin to complete their infection cycle has been investigated by Applicants. Melanin is accumulated in specialized cells, called appressoria, which allow the phytopathogen to penetrate the host leaf tissues and complete the infection process (Eisenman and Casadevall 2012). As widely demonstrated, the inhibition of melanin production in this particular group of melanized fungi, strongly reduce their infection capacity (Howard and Ferrari 1989; Chumley and Valent 1990).

The choice of studying suppression of virulence by VOCs instead of growth inhibition is guided by the ecological advantages of the former approach that may translate into more effective biocontrol efficiency. For instance, respect to growth inhibition, virulence suppression does not favor resistance selection and promote competitive exclusion of other pathogens from the same niche. In the absence of virulence activation, the pathogen is forced to use the available resources for non-virulent growth over the host tissues (such as for instance the leaf exudates), determining space occupation and resource depletion for other potential pathogens.

Applicants have investigated the effect of bacterial VOCs on melanin production and fungal virulence using a multidisciplinary approach. The VOCs effect on fungal phenotype and pathogenicity has been evaluated both *in vitro* and *in vivo.* Moreover, a combination of Gas Chromatography-Mass Spectrometry (GC-MS) and transcriptomic technologies are used to characterize, respectively, the bacterial volatile molecules involved in the fungal virulence suppression and the fungal metabolism changes induced by the exposure to the bacterial VOCs. Applicants used the black pigmented-phytopathogenic ascomycete *Magnaporthe oryzae* as the model organism for study. *M. oryzae* causes rice blast, one of the most devastating fungal diseases of cereal crops (Takatsuji 2014). Other dark-phytopathogenic fungi were also investigated to demonstrate the broad range of activity of bacterial VOCs to reduce the infection capacity of melanized-fungi.

Beneficial interactions between plants and microbes have important roles in sustaining plant fitness, by regulating growth promotion and controlling diseases. It has been extensively documented that plant-associated bacteria are endowed with biocontrol potential against different phytopathogenic microorganisms. Bacterial volatile organic compounds (VOCs) have been described among several other metabolites to exert biocontrol activity against growth of several phytopathogens. Despite the large investigations to understand the role of bacterial VOCs in growth inhibition, the potential suppression of virulence independent from inhibition of fungal growth has not been investigated. Suppressing virulence has several potential advantages over growth inhibition because it does not favor resistance selection and promotes competitive exclusion of other pathogens for the same niche.

Several phytopathogenic fungi - causing important agricultural losses - use melanin as a key factor to complete the infection cycle. Specialized infection structures produced by several fungi are characterized by melanized-rigid wall that ensures a turgor pressure, strong enough to penetrate host epidermal tissues. In this work, the role of VOCs released by bacteria associated with rice (*Oryza sativa*) in the prevention of melanin biosynthesis by fungal pathogens is explored. *Magnaporthe oryzae* - the causal agent of rice blast disease - and other dark- fungi have been selected as phytopathogen models for *in vitro* and *in vivo* experiments assessing the VOCs effects on the fungal phenotype. A significant reduction of fungal virulence has been observed through the inhibition of melanin biosynthesis bestowed by VOCs released by the selected bacteria. A combination of Gas Chromatography-Mass Spectroscopy analyses of bacterial VOCs and *in vivo* tests are used to identify the compounds capable of altering the fungal phenotype. Genomic and transcriptomic studies are undergoing to characterize the fungal transcripts affected by the bacterial VOCs and understand how such metabolites affect virulence.

### 1. The role of volatile compounds in microbial biology and interactions

Microbial interactions use info-chemical signals to develop spatial distribution and activity variations in ecosystems (Wheatley 2002). These signals are typically secondary metabolites consisting of soluble and volatile compounds (Wheatley 2002). They include terpenes, phenylpropanoids, benzenoids, nitrogen and sulphur compounds characterized by long/short distance effects (Junker and Tholl 2013). They mainly operate as "cell signaling" molecules involved in the cell-to-cell communication both at the inter- and intra-organism level (Chernin et al. 2013). Recent works demonstrated that volatile organic compounds (VOCs) are also able to exert important ecological services such as plant growth-promotion and biocontrol activity when the microorganisms are associated with the beneficiary host plant (Kai et al. 2009; Gutiérrez-Luna et al. 2010; Ryu et al. 2003). VOCs can favor the recipient plant, moving throughout the air space as well within the soil compartments, and exert their effects also in the absence of a physical association between producer and beneficiary (Audrain et al. 2015).

Recent published works investigated the biocontrol potential of these molecules. It has been demonstrated that the protection service mediated by VOCs is exerted essentially in two ways: i) by stimulating the plant defense system and/or ii) by inhibiting the pathogen growth and development (Hernández-León et al. 2015). In the first case, VOCs trigger the Internal Systemic Resistance (ISR) of the plant, enhancing its defensive ability when exposed to exogenous pathogens and priming the plant to better resist to the pathogen attack (Van Loon et al. 1998; Ryu et al. 2004). The second mechanism is directly active on the pathogen microorganism and involves the inhibition of growth affecting vital functions or inhibiting reproduction cycle (Weisskopf 2013).

In the last decade, many pieces of research have been conducted in this perspective with particular attention to the crop protection against fungal diseases. It has been reported that the 2,3- butanediol produced by *Enterobacter aerogenes* enhances maize defense system against the Northern corn leaf blight fungus *Setospaeria turcica* by stimulating the plant Induced Systemic Resistance (ISR) (D'Alessandro et al. 2014). 2,3-butanediol produced by *Bacillus subtilis* and *Bacillus amyloliquefaciens* decreased disease severity of the bacterial pathogen *Erwinia carotovora* subsp. carotovora against *Arabidopsis thaliana* (Ryu et al. 2004). Other VOCs have been involved in the suppression of fungal phytopathogenic attacks, such as hydrogen cyanide produced by *Pseudomonas* EA105 to inhibit *M. oryzae* growth and development (Spence et al. 2014).

While the inhibition of fungal growth mediated by VOCs has been well documented, only few reports are available on the effect of these molecules on fungal phenotype and virulence metabolism. Liu et al. (2008) observed for the first time that VOCs released by *Bacillus* spp. and *Paenibacillus* spp. were involved in the modification of the pigmentation of different dark- pathogenic-fungi, including pathogenic fungi belonging to *Alternaria, Fusarium, Phytoalexins* and *Verticillium* genera. All these fungi are able to complete their infection cycle only by producing and accumulating melanin in specialized cells called appressoria that are used for plant tissue infection. In this context, VOCs could be involved in a new mechanism of biocontrol that does not target the fungal growth control but relies on the suppression/reduction of fungal virulence and infectivity by altering the fungal virulence metabolism. This new strategy could represent an innovative and environmentally friendly approach to control phytopathogens that use melanin as a key factor to achieve their infection process.

### 2. Melanin production in dark-fungi as key player of pathogenicity

Melanin is a broad term to identify a group of naturally dark polymers with high molecular weight, produced by organisms ranging from animals and plants to microorganisms (Bell and Wheeler 1986). These polymers are formed by the oxidative polymerization of phenolic or indole compounds. The role and biosynthesis of melanins have been well studied in pathogenic fungi where these compounds are synthesized during spore formation for invading the host tissues (Engh et al. 2007; Ryder and Talbot 2015; Scharf et al. 2014; Howard and Ferrari 1989). Melanins are not essential for the growth and the development of fungi but act as *"body armour"* enhancing the competitive abilities of species under unfavourable environmental conditions. In fungi, melanins increase the resistance of hyphae and spores to harsh environmental conditions, such as UV, high temperature, humidity, drought, free radicals, radioactivity and bio-antagonist compounds (Butler and Day 1998; Bell and Wheeler 1986; Henson et al. 1999; Boyce et al. 2015). Reduction in the melanin production of *Alternaria alternata* strongly affected the conidia fitness increasing their sensitive to UV light (Kawamura et al. 1999). In *Cochliobolus heterotrophus,* a maize pathogen, albino-spore mutants resulted more susceptible to stresses showing a reduced survival rate (Leonard 1977). In addition to these protective functions, melanin synthesis is associated with virulence of several pathogenic fungi (Abbo 2012; Valentino et al. 2015). The presence of melanin can strongly influence the infection capacity of pathogenic fungi strengthening the appressorium, a specialized cell used to infect host plants (Ryder 2015; Galhano and Talbot 2011). Melanin is accumulated in the cell wall of the appressorium (Figure 1A). This structure becomes completely melanized except at the appressorium pore, a small gap in contact with plant tissues surface that is used by the fungus to release cell wall degrading enzymes involved in the infection process and to uptake the necessary nutrients (Howard and Valent, 1996). The presence of melanin in the appressorium is essential for invading plant tissues due to its capacity to form an impermeable barrier (Figure 1A) that favors the accumulation of glycerol and other osmolytes (Figure 1B), generating the pressure necessary to penetrate the host tissues (Figure 1C). The penetration through the epidermal cuticle of the host cell is facilitated by the generation of enormous turgor pressures that exceed 8 MPa (Money 1997, Howard et al. 1991).

Mutations in the melanin biosynthetic pathway strongly influence the turgor pressure of the appressoria and consequently the capacity of fungi to penetrate the plant tissues (Chen et al. 2004; Langfelder et al. 2003). In *Colletotrichum lagenarium,* a plant pathogen of melons and cucumber, as well as in *Alternaria alternata,* the fungus causing leaf spot on over 380 host species of plant, impairment in melanin biosynthesis resulted in a reduction of fungal infection capacity (Troncoso- Rojas and Tiznado-Hernández 2014; Kubo and Takano 2013). Albinos *M. oryzae* mutants - not able to synthesize melanin - become non-virulent and fail to infect and invade host tissues, confirming the fundamental role of melanin in rice blast infection process (Chumley and Valent 1990). Melanized appressoria have been shown to be important player in the virulence of other dark-plant pathogens including the black spot disease agent *Diplocarpon rosae* (Gachomo et al. 2010), the causal agent of the coffee berry disease *Colletotrichum kahawae* (Peterson et al. 2003), the causal pathogens of tomato stem canker *Alternaria arborescens* (Barkai-Golan and Paster 2008) and *Cladosporium* sp. (Rashid et al. 2013), the fruit seeds rot *Colletotrichum* sp. (Takano et al. 1997), the Southern corn leaf blight of Maize *Cochliobolus heterostrophus* (Balint-Kurti et al. 2007), the brown leaf spot rice pathogen *Bipolaris oryzae* (Xiao et al. 1991), the peanut pathogen *Aspergillus niger* (Sharma 2012), the take all disease causal agent *Gaeumannomyces graminis* (Freeman and Ward 2004) and the black leg disease phytopathogen *Leptosphaeria maculans* (Winter and Koopmann 2016).

### 2.1 Melanin biosynthetic pathways in phytopathogenic fungi and action modes of its inhibitors

Melanin is one of the most stable and resistant biochemical molecules and it is insoluble in water (Nicolaus et al. 1964). Melanins are structurally very diverse and carry three types of polymers: eumelanin (DOPA)ₙ, pheomelanin (Cysteinyl DOPA)ₙ and allomelanin (DHN)ₙ (Butler and Day 1998). Two main melanin biosynthetic pathways have been described in fungi: the 1,8- dihydroxynaphthalen (DHN) and the DOPA 3,4-dihydroxyphenylalanine (DOPA) (Figueiredo- Carvalho et al. 2014; Boyce et al. 2015; Schumacher 2015). Most of the fungal melanins are derived from the DHN biosynthetic pathway and reside primarily in ascomycetes and related deuteromycetes, such as *M. oryzae* (Bell and Wheeler 1986).

As previously described, DHN-melanin is a crucial component for the infection capacity of several dark fungi involving melanin in their phytopathogenic activity. Basing on this outcome, within the frame of plant diseases control, several groups of compounds that specifically block DHN melanin biosynthesis have long been used as pesticides. They are assigned as conventional Melanin Biosynthesis Inhibitors (cMBIs) and are namely: Tricyclazole, Pyroquilon, Phthalide, Carpropamid, Azoxystrobin and Diclocymet. These fungicides act as DHN melanin biosynthesis inhibitors interrupting the enzyme activity of this pathway at different levels, as reported in the Figure 2A. For instance, Tricyclazole, Pyroquilon, and Phthalide block both reduction steps between 1,3,6,8-THN and scytalone and between 1,3,8-THN and vermelone. However, Carpropamid, Diclocymet, and Fenoxanil inhibit the two dehydration steps between scytalone and 1,3,8-THN and between vermelone and 1,8-DHN (Hamada et al. 2014) (Figure 2A).

The application of cMBIs induces the defect of melanin biosynthesis in appressoria, reducing the turgor pressure of appressoria, necessary to penetrate plant tissues. Within all the cMBIs, the most extensively used for crop pathogen control is the Tricyclazole (TCZ: C₉H₇N₃S). It is a systemic fungicide widely used to control DHN melanin-producing phytopathogens by inhibiting the penetration step (Woloshuk et al. 1983), without significantly affecting mycelial growth (Kunova et al. 2013). The effectiveness of TCZ has been documented for cereals' phytopathogens such as *Boipolaris sorokiniana* (Chattopadhyaya et al. 2013), *M. oryzae* (Froyd et al. 1976) and *Aspergillus sp.* (Wheeler 1995). *In vitro,* the melanin inhibition by cMBIs is translated with various phenotypic alterations of the treated fungi depending on the applied fungicide. For instance, when grown on fungal growth media treated with Tolprocab or Tricyclazole, *M. oryzae* pigmentation is affected, turning from black to white or orange (Figure 2B). The observed color change is a phenotypic indication that confirms the melanin biosynthesis pathway inhibition.

### 3. Magnaporthae oryzae as a model organism

*M. oryzae* is a dark-filamentous ascomycete responsible of the blast disease, considered as the most devastating rice pathology worldwide. *M. oryzae* occurs in more than 85 countries (Figure 3) causing economically significant crop losses estimated between 10 to 30 % of the global rice yield per year (Talbot 2003). *M. oryzae* has been used as the model organism to study and understand host-phytopathogen interactions (Ebbole 2008). A recent research work showed that rice blast fungus is originated from South East Asia (Saleh et al. 2014). Basing on multilocus genealogy and mating experiments, *M. oryzae* has been described as a new species distinct from *M. grisea,* even though no morphological differences among them have been observed. While *M. grisea* is associated with the grass genus *Digitaria, M. oryzae* is associated with *Oryza sativa* (Vidal-Cros et al. 1994), *Triticum* spp. (Wheat), *Hordeum vulgare* L. (Barley), *Brachypodium* and other cultivated grasses (*Eragrostris curvula, Eleusine coracana, Lolium perenne, Setaria spp.*) (Zhang et al. 2014; Jansen et al. 2007; Parker et al. 2008). All *Magnaporthe* species exploit melanin as a key factor to complete the host plant infection. For this reason, *Magnaporthe* has been used as the model organism to study and characterize the role of melanin in dark fungi infection cycle.

### 3.1 Life cycle of M. oryzae and biological control

Rice blast is a devastating plant disease that affects various organs in the seedlings, mainly the leaves (Kato 2001; Marcel et al. 2010). *M. oryzae* infects the leaves causing a spot infection characterized by large, spreading lesions with a necrotic center and a chlorotic margin (Figure 4A). The disease cycle consists on a series of sequential discrete developmental steps (Figure 4B). Infection occurs when a teardrop shaped spores (conidium) sticks to the host surface. A polarized germ tube emerges from the conidium before differentiating into a dome-shaped specialized infection structure, the appressorium (Talbot 2003). Once formed, the appressorium becomes darkly pigmented due to DHN melanin layer formation in the cell wall (Howard and Ferrari 1989). At this stage, the appressorium matures and accumulates compatible solutes such as glycerol (Figure 4C) leading to an enormous turgor pressure (>8 MPa) (Wilson and Talbot 2009; Dean et al. 2005). Such physical force allows a penetration hypha to rupture the host plant cuticle. Under favorable conditions of moisture and temperature (long period of plant surface wetness, high humidity, little or no wind, night temperature between 12°C and 32°C), at the end of the infection cycle, conidia are produced and spread by wind or rain splash to resume the infection cycle (Zhang et al. 2014; Kato 2001).

Currently no environmentally safe effective ways to provide adequate control of *M. oryzae* are available (Spence et al. 2014). While traditional protection strategies, such as fertilizers reduction, incessant field flooding, post-harvest burning of plants and the exploitation of rice varietal diversity (Zhu et al. 2003), have been adopted without satisfying results, chemical fungicides that target melanin synthesis (i.e. Tricyclazole) are able to reduce blast disease damages (Skamnioti and Gurr 2009). Despite their effectiveness, these chemical compounds pose environmental concerns due to their toxicity (Waard 1993; Ishii 2006) and the possibility to induce pathogen resistance to the fungicide (Castroagudín et al. 2015).

In this context, an alternative environmentally friendly approach for control of rice Blast diseases and other phytopathogenic infections - is mandatory. The rapid expansion of fungal phytopathogen diseases showed disastrous consequences on the global biodiversity. Basing on the red list database provided by the International Union for Conservation of Nature (IUCN), species are threatened worldwide with 4% of extinct species attributed to infectious diseases (Smith et al. 2006). However, this huge species extinction affects not only crops but also the fungal phytopathogens, because of the intensive use of pesticides to control plant infections diffusion. Consequently, a macro evolutionary and ecological approach is necessary to prevent the massive crop losses and the dramatic economic costs that fungal phytopathogens induce, considering the diversity promotion and preventing fungal species extinction. Such strategy is expected to cope with the universal threat of food security while maintaining a long-term ecological balance.

Plant diseases related to fungal infections are dramatically increasing and threatening the global agriculture. Contrastingly, crop yields must double over the next 40 years to sustain the nutritional needs of the expanding world population. To deal with this crop loss threat, farmers are adopting chemical strategies that showed a significant ineffectiveness, exert high selective pressure on populations and may lead to further environmental and health problems. In this context, biological control proved to be a very attractive alternative given its benign consequence on the environment and its low cost. Many researches have been conducted in this perspective. Nevertheless, all existing studies have exclusively dealt with antagonism activity against plant pathogens targeting the inhibition of pathogen growth.

Identified herein are new approaches for the biocontrol of phytopathogens, involving Volatile Organic Compounds (VOCs) produced by plant-associated bacterial strains, which only alter the fungal pathogenicity and virulence without affecting its natural growth and survival. The main aim of this work was to provide a new strategy of plant pathogen biocontrol while allowing fungal growth and dispersion, in order to preserve the fungal fitness and the ecological stability in particular and the broad ecosystem diversity in general.

Thus, we have assessed, through a multidisciplinary approach, the contribution of bioactive VOCs released by rice associated bacteria in the biocontrol of *M. oryzae* infection of the same rice plant by interfering with the fungal physiological processes during infection and the enhancement of plant growth. This work provides a biotechnological application, relying on the exploitation of the identified VOCs, characterized for their mechanism of action, to support disease management strategies in the field.

In a previous work, rhizospheric and root tissues bacteria have been isolated from asymptomatic rice plants (Marasco et al. 2014, unpublished). *In vitro* response of *M. oryzae* to volatile compounds released by several rice associated bacteria showed an inhibition activity against *M. oryzae* black pigmentation. Since black phenotype of *M. oryzae* is related to melanin production and knowing that melanin is involved in the fungus pathogenesis, Applicants hypothesized that bacterial VOCs could alter *M. oryzae* pathogenicity.

Applicants have confirmed the previous results of the *in vitro* response. In addition, the study of the virulence response *in vivo* in rice plants challenged by the pathogen and the investigation of the produced VOCs composition were the targets of the research.

Also investigated are whether the bacterial VOCs affect rice plant growth and health while used for biocontrol purpose. Further, we have compared the effect of the identified commercial VOCs on *M. oryzae* pathogenicity with the effect of VOCs naturally produced by bacterial strains *in vitro* to determine the compound(s) responsible for fungal pathogenicity biocontrol. Applicants intended to establish whether or not there is a dose-response relationship for any particular VOC revealed as potentially active. Experiments were completed to understand the fungal response to bacterial VOCs through analysis of the fungal metatranscriptome. Lastly, the effect of VOCs released by the same bacterial strains on other dark pigmented fungi isolated from environmental samples were evaluated. This is to understand if bacterial VOCs potential is exclusively specific against *M. oryzae* pathogenicity or if they can affect other black fungi as well. The effect of bacterial VOCs on fungi spore germination and appressoria formation has also been investigated.

One embodiment provides a composition comprising an amount of one or more bacteria-derived volatile organic compounds or a commercial equivalent thereof, and an amount of an agriculturally acceptable carrier. In certain embodiments, the one or more volatile organic compounds of the composition are derived from bacteria of the Citrobacter genus, the Enterobacter genus, or a combination thereof. In other embodiments, the bacteria from which the volatile organic compounds of the composition are derived are of the *Citrobacter freundii* species or the *Enterobacter cloacae* species. In further embodiments, the one or more volatile organic compounds of the compositions are selected form the group consisting of 1-propanol-2-methyl, 1-butanol-3-methyl, 1-butanol-3-methyl acetate, a bacterial volatile organic compound commercial equivalent of 1-propanol-2-methyl, a bacterial volatile organic compound commercial equivalent of 1-butanol-3-methyl, and a bacterial volatile organic compound commercial equivalent of 1-butanol-3-methyl acetate. In still other embodiments, the one or more volatile organic compounds of the compositions are selected from the group consisting of 1-butanol-3-methyl, a bacterial volatile organic compound commercial equivalent of 1-butanol-3-methyl, and a combination thereof.

Another embodiment provides a method of inhibiting melanin biosynthesis in phytopathogenic fungi, comprising exposing phytopathogenic fungi to an effective amount of one or more volatile organic compounds, wherein the synthesis of melanin in phytopathogenic fungi exposed to the one or more volatile organic compounds is decreased relative to the synthesis of melanin in phytopathogenic fungi not exposed to the one or more volatile organic compounds.

Yet another embodiment provides a method of suppressing fungal infection in plants, comprising treating the plants with an effective amount of one or more volatile organic compounds, wherein the plant is also exposed to one of more phytopathogenic fungi, wherein said treatment of volatile organic compounds suppresses the virulence of said fungi in said plants.

According to some embodiments of the methods provided herein, the infection is rice blast disease. In other embodiments of the methods provided herein, plant is of the Oryza genus. In some embodiments of the methods provided herein, the exposure to the one or more volatile organic compounds suppresses the development of the conidia in the fungi. In other embodiments of the methods provided herein, the exposure to the one or more volatile organic compounds suppresses the formation of appressoria in the fungi.

In certain embodiments of the methods provided herein, the fungi are selected from the group consisting of the genus Magnaporte, the genus Colletotrichum, the genus Verticillium, and the genus Bipolaris. In other embodiments of the methods provided herein, the fungi are selected from the group consisting of *Magnaporte oryzae, Colletotrichum lindemuthianum, Verticillium dahlia, Verticillium tricorpus, Verticillium nigrescens* and *Bipolaris sorokiniana.*

In additional embodiments of the methods provided herein, the volatile organic compounds are produced in bacteria, are synthetic equivalents to the volatile organic compounds produced in bacteria, or are a combination thereof.

In still other embodiments of the methods provided herein, the one or more volatile organic compounds are derived from bacteria of the *Citrobacter* genus, the *Enterobacter* genus, or a combination thereof. Additionally, in certain embodiments of the methods provided herein, the one or more volatile organic compounds are derived from *Citrobacter freundii* species, the *Enterobacter cloacae* species, or a combination thereof.

In addition, in some embodiments of the methods provided herein, the volatile organic compounds are selected from the group consisting of 1-propanol-2-methyl, 1-butanol-3-methyl, 1-butanol-3-methyl acetate, a bacterial volatile organic compound commercial equivalent of 1-propanol-2-methyl, a bacterial volatile organic compound commercial equivalent of 1-butanol-3-methyl, a bacterial volatile organic compound commercial equivalent of 1-butanol-3-methyl acetate, and a combination thereof. In other embodiments of the methods provided herein, the one or more volatile organic compounds are selected from the group consisting of 1-butanol-3-methyl, a bacterial volatile organic compound commercial equivalent of 1-butanol-3-methyl, and a combination thereof.

Additionally provided are methods of inhibiting melanin biosynthesis in phytopathogenic fungi, comprising exposing phytopathogenic fungi to an effective amount of the composition of any of claims 1-5, wherein the synthesis of melanin in phytopathogenic fungi exposed to the one or more volatile organic compounds is decreased relative to the synthesis of melanin in phytopathogenic fungi not exposed to the one or more volatile organic compounds.

Also provided are methods of suppressing fungal infection in plants, comprising treating the plants with an effective amount of the composition of any of claims 1-5, wherein the plant is also exposed to one of more phytopathogenic fungi, wherein said treatment of volatile organic compounds suppresses the virulence of said fungi in said plants.

### Definitions:

As used herein, the recited terms have the following meanings. All other terms and phrases used in this specification have their ordinary meanings as one of skill in the art would understand.

An "effective amount" refers to an amount effective to treat a disease, disorder, and/or condition, or to bring about a recited effect. An "effective amount" may also refer to an amount sufficient to effect beneficial or desired results. An effective amount can be administered in one or more administrations. In terms of treatment and protection, an "effective amount" is that amount sufficient to palliate, ameliorate, stabilize, reverse, slow or delay the progression of fungal or bacterial disease states. Plant, as defined herein, includes any and all portions of a plant, including the root system, the shoot, including the stem, nodes, internodes, petiole, leaves, flowers, fruit, and the like, either prior to or post-harvest. Plant is also meant to include any cell derived from a plant, including undifferentiated tissue (e.g., callus) as well as plant seeds, pollen, progagules and embryos.

The terms "treating", "treat" and "treatment" include preventing a disease or pathologic condition from occurring, inhibiting the disease or pathologic condition or arresting its development, and/or diminishing symptoms associated with the disease or pathologic condition. Thus, the terms "treat", "treatment", and "treating" extend to prophylaxis and include prevent, prevention, preventing, lowering, stopping or reversing the progression or severity of the condition being treated.

The terms "inhibit", "inhibiting", and "inhibition" refer to the slowing, halting, or reversing the growth or progression of a disease, infection, or condition. The inhibition can be greater than about 20%, 40%, 60%, 80%, 90%, 95%, or 99%, for example, compared to the growth or progression that occurs in the absence of the treatment, exposure or contacting.

The term "exposing" as used herein refers to subjecting to an action, treatment or condition. As used herein, exposing plants to an amount of one or more VOCs is a type of treating a plant. Further, as used herein, "exposing" refers to a method of supplying plants with doses, effective amounts or treatments of one or more VOCs.

The compositions described herein can be formulated and administered to a plant in a variety of forms. The forms can be specifically adapted to a chosen route of administration.

The compounds described herein may be systemically administered in combination with an agriculturally acceptable vehicle or carrier.

As used herein, phytopathogenic fungi include, but are not limited to, any genus of fungi that causes disease in plants, or organisms that are parasitic on plant hosts, including but not limited to species of Magnaporte, Torula, Fusarium, Sclerospora, Phythium, Alternaria, Phyricularia, Erysiphe, Cerecospora, Haemelia, Collectotrichum, Sclerotinia, Helminthosporium , Synchytrium , Puccinia , Ustilago , Urocystis , Gibberalla , Claviceps , Gloeosporium , Discula , Dibotryon , Botrytis , Phytophthora , Cryphonectria , Rhizoctonia, Aphanomyces , Cylindocladium , Diplodia , Phoma , Ceratocystis , Ophiostoma , Claviceps , Taphrina , Bremia , Peronospora , Plasmopara , Pseudoperonospora , Erysiphe speices, Microsphaera , Phyllactinia , Podosphaera , Sphaerotheca , Uncinula , Armillaria , Clitocybe , Aphanomyces , Pythium , Daedalea , Fomes , Lenzites , Polyporus , Poria , Stereum , Penicillium , Gymnosporangium , Hemileia , Venturi a , Tilletia , Ustilago , Capnodium , Fumago , Scorias , Blumeria , Mycospaerella , Melampsora , Aspergillis , Cladaosporium , Phomopsis , Rhizopus, Puccinia, Monilinia, and Sclerotinia . Additionally, the phytopathogenic fungi can refer to the fungi that cause rice blast disease.

As used herein, plant refers to any member of the kingdom Plantae. The term plant also includes, but is not limited to, any living organism of the kind exemplified by trees, shrubs, herbs, grasses, ferns, mosses, typically growing and absorbing water and inorganic substances through a root systems and synthesizing nutrients in its leaves by photosynthesis using green pigment chlorophyll. The term plant further includes, but is not limited to, plants producing crops such as wheat, rice, soybeans, corn, barley, and any other plant product grown and/or harvested for profit or substance. The term plant may also refer to plants of the genus Oryza.

By "flowering plant" is meant any angiosperm. Examples of angiosperms include but are not limited to nearly all of the plants that have been domesticated for agriculture, such as wheat, maize, beans, rice, oats, potatoes and soybeans, as well as ornamentals.

"Ornamental flowering plant" refers to flowering ornamentals including but not limited to orchids, petunias, zinnias, asters, begonia, geranium, lily, African violet and rose.

"Fruit-bearing plant" encompasses fruit-producing plants including but not limited to strawberry, raspberry, grapevine, tomato, pepper, cucumber, squash, melon, cantaloupe, watermelon, apple, peach, plum, nectarine, pear, sweetsop, cherimoya, banana, avocado, currant, persimmon, papaya, mango, guava and kiwifruit.

A "vegetable plant" is one which produces vegetables; examples of such plants include but are limited to bean, beet, carrot, potato, spinach, celery, broccoli, cauliflower, cabbage and lettuce.

Bacteria-derived volatile organic compounds and BVOCs are used interchangeably, and refer to volatile organic compounds produced by bacteria. The BVOCs contemplated by the embodiments provided herein include volatile organic compounds produced by any bacteria species. In certain embodiments, the BVOCs are produced by *Citrobacter* or *Enterobacter* species, including but not limited to *Citrobacter freundii* and *Enterobacter cloacea.* In other embodiments, the volatile organic compounds are synthetic equivalents to the volatile organic compounds produced in bacteria.

As used herein, "biological control" is defined as control of a pathogenic organism by the use of a second organism. Known mechanisms of biological control include enteric bacteria that control root rot by out-competing fungi for space on the surface of the root. Bacterial toxins, such as antibiotics, have been used to control pathogens. The toxin can be isolated and applied directly to the plant or the bacterial species may be administered so it produces the toxin in situ.

A "fungal-suppressing amount" of a bacterial-derived volatile organic compound or a volatile organic compound produced by a bacterium is an amount sufficient to suppress growth of a phytopathogenic fungus by at least about 50% in comparison to fungal growth for an untreated plant. Preferably, the fungal-suppressing amount will be sufficient to suppress from about 60%-80% of fungal growth occurring on an untreated plant, and will depend upon various factors such as soil condition, climate, plant type, planting conditions and the like.

### EXAMPLES

### Example 1: Role of bacterial volatile organic compounds (VOCs) in Magnaporthe oryzae control

**Introduction:** Rice is the primary human staple crop that feeds more than the half of the world population (USDA-ERS 2012). With the twin forces of population growth and economic expansion, rice requirements are expected to increase by 1.7% annually until 2025, the equivalent of 13 million tonnes of rough rice per year (Zeigler et al. 1994). In the production of this crop, plant diseases are one of the main yield-limiting factors. Blast disease is the most devastating rice infection caused by the phytopathogen *Magnaporthe oryzae:* every year 10 to 30% of the global rice yield is lost due to the attack of this fungus (Song and Goodman 2001). The developmental cycle of *M. oryzae* consists in a series of sequential and discrete steps that end with the infection of the leaf and the release of new spores (Martin-Urdiroz et al. 2016). This developmental process starts with the adhesion of a fungal spore, called conidium, on the hydrophobic host leaf surface. In response to specific environmental stimuli, mainly high humidity, a germ tube emerges from the conidium and its tip starts to accumulate high concentrations of polyols, forming a dome-shaped melanized appressorium. From this cell, thin hyphae develop and directly penetrate into the plant internal tissues starting the infection process. The invasive hyphae ramify throughout the first colonized cell, spreading the infection from cell-to-cell. After four days of rice blast infection, symptomatic lesions appear on the host surface (Figure 4B). Since melanin confers the rigid structure of the appressoria and induces the high turgor pressure to pierce the host surface, penetrate and invade it, this pigment is considered as the key player of the entire infection cycle (Chumley and Valent 1990). Melanin-deficient mutants of *M. oryzae* are not able to infect intact rice leaf tissues due to their inability to accumulate solutes in the appressoria and generate high pressures to penetrate the host leaf cuticle (Chumley and Valent 1990).

To deal with melanin producing phytopathogens, many efforts have been spent to find anti- penetrant molecules acting as inhibitors of melanin biosynthesis (Sisler 1986; Motoyama and Yamaguchi 2003; Kumar et al. 2015). Conventional Melanin Biosynthesis Inhibitors (cMBIs) are molecules active against *M. oryzae* - as well as others melanin-producers phytopathogenic fungi. cMBIs inhibit the pathogen penetration into intact host plants by blocking the biosynthetic pathway of DHN-melanin, without altering mycelial growth, spore germination and appressoria formation of a broad range of dark fungi. Within cMBIs Tricyclazole, Pyroquilon, Phthalide and Tolprocarb are the most active in the blast disease control (Hamada et al. 2014; Froyd et al. 1976). In the last decade, new research works aimed to find a new environmental strategy to counteract blast disease spread (Gnanamanickam 2009). Several bacterial strains have been suggested to ensure blast disease biocontrol (Tendulkar 2007; de Oliveira Nascimento et al. 2016).

Interestingly, bacterial Volatile Compounds (VOCs) are also involved in the control of *M. oryzae* growth (Alff 2012; Spence et al. 2014; Elsharkawy et al. 2015). Spence et al. (2014) demonstrated that the rice rhizospheric bacterial strain *Pseudomonad* EA105 effectively inhibits the growth and appressoria formation of *M. oryzae* as well as triggers an Induced systemic resistance (ISR) in rice plant involving bacterial VOCs.

It would be interesting to understand if bacterial VOCs are also able to interfere with the virulence development rather than the pathogen growth, for instance, through the inhibition of the melanin biosynthetic pathway and act as the cMBIs molecules in an environment-friendly way. In this context, the aim of this work is to investigate if VOCs released by bacteria naturally associated to rice plants may reduce *M. oryzae* infection capacity and virulence by interfering with its secondary metabolism and/or inhibiting melanin biosynthesis.

We will examine the influence of bacterial VOCs on *M. oryzae* growth, development and pathogenicity. As part of this study, we will identify the volatile compounds involved in this activity. Further, we will examine whether the chemical compounds analogous to the bacterial VOCs released have the same effect on *M. oryzae* infection capacity. In addition, we will determine whether or not bacterial VOCs affect plant growth and development.

**Hypotheses:** According to preliminary observations, *M. oryzae* shows a color variation from black to white when growing in the presence of VOCs produced by certain bacterial isolates. Considering that melanin is the pigment responsible of fungus black color and its pathogenicity (Henson et al. 1999; Gessler et al. 2014), I hypothesize that bacterial VOCs could interfere with the synthesis of melanin, reducing the *M. oryzae* infection capacity. I further hypothesize that the selected bacteria produce a bouquet of VOCs composed by molecules with chemical properties similar to the cMBIs ones. I also assume that the VOCs produced by bacteria naturally associated to rice plant can interfere with the fungal pathogenicity without affecting rice growth and wellness.

**Aims:** The four aims of the studies provided herein are as follows: 1. Evaluation of bacterial VOCs effect on i) growth, ii) development and iii) infection capacity of *M. oryzae.* 2. Characterization of the chemical composition and nature of the VOCs produced by the selected bacteria *in vitro.* 3. Determination of the inhibitory effect of the bacterial VOCs commercial-equivalents on melanin synthesis and fungal pathogenicity. 4. Evaluation of the plant growth promoting activity of i) bacteria cells and ii) bacterial VOCs on the growth and development of rice plant.

### Materials and methods

### Fungal and bacterial growth conditions.

*M. oryzae* strain BAO102 is cultivated on Potato Dextrose Agar (PDA, 200 gL⁻¹ potato slides, 20 gL⁻¹ dextrose and 15 gL⁻¹ agar). Petri dishes are incubated at 30°C in the dark for 14 days and the new mycelium obtained is used for the further experiments. The selected bacterial strains (named B10, B16 and B17) are inoculated in 30 ml Tryptic Soy Broth (TSB, SIGMA) or spread on TSB solid medium (TSA) and incubated overnight at 30°C. The bacterial cultures obtained are then used for the further experiments. Cultures of the fungal and bacterial strains are stored in 25% glycerol at -80°C.

### Phylogenetic identification of fungi and bacterial strains.

Bacterial strains are cultivated on TSA media at 30°C for 24 hours then bacterial DNA is extracted from fresh bacterial culture on TSB using boiling lysis. The bacterial cells are resuspended in 50 µl of sterile TE (10 mM Tris/HCl, pH 8, 1 mM EDTA) in 1.5 ml tubes and incubated at 100°C for 8 min (Marasco et al. 2012). The extracted DNA is used as a template for PCR amplification of the 16S rRNA gene, using universal primers 27F (AGAGTTTGATCMTGGCTCAG) and 1492R (TACGGYTACCTTGTTACGACTT). In the other hand, 100 mg of fungal mycelium is flash frozen with liquid Nitrogen and crushed with a sterile pestle. The fungal DNA is extracted using the Kit E.Z.N.A ^{®} Fungal DNA Mini Kit (OMEGA Bio Tech). The identity of fungal isolates is further confirmed by sequencing the ITS region amplified using primers ITS1F (TCCGTAGGTGAACCTGCGG) and ITS4R (TCCTCCGCTTATTGATATGC) following the protocol described in (White et al. 1990). PCR products are checked by gel electrophoresis in 1% agarose gel. Sequencing of bacterial and fungal PCR replicates is performed by the KAUST Bioscience Core lab. The sequences are compared with those deposited in the GenBank database, using the online software BLAST.

### Assessment of bacterial VOCs effects on M. oryzae growth and development.

Biocontrol activity of bacterial VOCs against the fungus *M. oryzae* is evaluated using the dual plate *in vitro* assay (Spence et al. 2014). Briefly, the experiment is conducted in compartment of Petri dishes divided into two compartments that are connected only by the headspace. The first compartment is filled with the fungal medium (PDA) and the second one with the bacterial medium (TSA). Twenty µl of 10⁸ bacterial cells are inoculated on the TSA medium. Bacterial cell concentration is determined by using a Thoma cell counting chamber. The Petri dishes are then sealed and incubated at 30°C for 48h. A physiological solution is used as a control. Then, nine millimeters diameter plugs of *M. oryzae* (grown as described before) is placed on the PDA medium. The Petri dishes containing fungal and bacterial inoculum are sealed with Parafilm 'M' and incubated at 30°C. After 7 days of incubation, the Petri dishes are photographed and the obtained images are analyzed using the ImageJ software to measure the fungal colony radius and evaluate pigmentation. The fungi subjected to the different treatments are then transferred in new PDA Petri dishes (in the absence of bacteria) to assess if the observed modification is persistent or are lost after fungal re-growth. All the experiments are performed in triplicate.

### Bacterial VOCs identification using two VOCs extraction methods coupled with GS-MS.

Two ml of TSA media are poured in 40 mL glass vial stopped with a PTFA septum and inoculated with 20 µl of 10⁸ bacterial cells. An automatic Stratum Purge and Trap Concentrator (PTC, Stratum, Teledyne Tekmar, Mason, OH, USA) interfaced with an auto-sampler (Solatek 72 Multimatrix Vial Autosampler, Teledyne Tekmar, Mason) is used for the extraction of VOCs. The extracted compounds are then injected in a Gas Chromatograph (GC, Agilent Technologies, USA) equipped with a split injector, a DB-624 capillary column (60 m×250 µm ×1.4 µm film thickness, Agilent Technologies, USA) and a flame ionization detector. Each sample is maintained at 65°C for 0.5 min and then flushed with Helium at a flow rate of 50 ml/min for 20 min. The transfer line, moisture trap and 6-port valve are kept at 210°C. A 5975 C Mass Spectroscopy detector (MS, Agilent Technologies, USA) used for the analysis. Oven conditions started at 40 °C for 4 min, then ramped to 190°C at 15°C min⁻¹ up to a final temperature of 245°C at 10°C min⁻¹ and held 6.5 min at that temperature.

Similarly, an SPME manual holder (Supelco, Bellafonte, PA, USA), equipped with a two cm×50/30 µm Stable Flex Divinylbenzene/Carboxen/Polydimethylsiloxane (DVB/CAR/PDMS, Supelco) is inserted through the PTFA cap. The fiber coating is exposed for 30 min to the bacterial culture headspace. The VOCs are desorbed by directly introducing the fiber for one min into the injection port of the GC maintained at 260°C. VOCs peaks identification is carried out by comparison of mass spectra with the data from the mass spectral library NIST 11.

### Evaluation of bacterial VOCs-commercial-equivalents (BVCE) effect on M. oryzae growth and development.

To evaluate the effect of bacterial VOCs-commercial-equivalents BVCE on *M. oryzae* growth and development, a dual plate *in vitro* assay is conducted with some modifications. In this case, sterile square filter paper (5mm × 5 mm) is placed on one side of the Petri dish and 10 µl of serial dilutions of the BVCE is poured on it. A circular plug of *M. oryzae* will be positioned on the PDA solid medium side, as described before. The Petri dishes is sealed with Parafilm 'M' and incubated at 30°C. After 7 days, the plates are analyzed as described before. A similar protocol is used to evaluate the effect of different combinations of selected BVCE. In this case, a drop of two or more chemicals is placed in one side of the dual petri dishes on a paper filter. The concentrations used in this assay will be selected on the basis of the results that will be obtained in the dual petri dish assay conducted with the pure compounds.

### Extraction and purification of melanin.

Intracellular melanin from 0.1 g mycelia is extracted and estimated according to the method described by (Bashyal et al. 2010). The OD₄₀₀ of the extract dissolved in NaOH is measured. Melanin content (µg g⁻¹ of mycelium) is determined as follows: melanin content (g L⁻¹) = OD₄₀₀ × 0.105 × N (N, dilution fold).

### Evaluation of bacterial VOCs effect on rice healthiness and growth.

Three weeks old rice plants are placed in hermetically closed and isolated Plexiglas boxes. Each box contains one healthy rice plant in the presence of bacterial culture of the three strains B10 or B16 or B17. The plants are exposed to the bacterial VOCs for 10-15 days. All the experiments are performed in triplicates. After exposure, the general state and healthiness of the plants is assessed.

### Evaluation of the effect mediated by bacterial VOCs and BVCE on fungal infection capacity in vivo.

The seeds of *Oryza sativa* var. Maratelli and var. Carnaroli are surface-sterilized with 1% hypochlorite solution and germinated in the growth chamber (26°C, 16h photoperiod, 60% humidity). After 7 days, the germinated seeds are transferred to soil and grown in the greenhouse (28°C, 60% humidity). Three-weeks-old plants are used for the infection experiments. Twenty µl of bacterial culture (B 10, B 16 and B 17) are inoculated on the TSA medium in one part of the petri dish and incubated at 30°C for 48 hours. *Escherichia coli* is also used as a control. A solution of conidia is obtained by flooding 10 days old fungal culture grown on Rice extract media (26°C) with two ml sterile water. The collected conidia are counted under the microscope (Zeiss Axioscope 2 upright Light microscope) and diluted together with Tween 20 in order to obtain final concentrations of 100 conidia µl⁻¹ and 0.001%, respectively. The leaves of three weeks old rice plants will be inserted in the empty side of a sterile petri dish without separating them from the plant. The leaves are fixed on the bottom of the petri dish with adhesive tape and infected with 5 µl droplets of the conidia solution (100 conidia µl⁻¹). Five drops of five µl each are placed on each leaf (Figure 3). The Petri dishes are sealed with Parafilm 'M' and the entire plant transferred in the growth chamber (26°C, 60% HR). Petri dishes inoculated with 5 µl droplets of sterile distilled water are used as a control. After 5-7 days leaves are visualized to evaluate the infection rate and analyzed at the microscope to assess the infection structures formed by the fungus. Three independent experiments are performed to confirm the effect of the bacterial VOCs.

### Microscopic examination of Blast infected rice leaves exposed or not to bacterial VOCs.

The rice leaves infected with the conidia of *M. oryzae* BOA 102 and their controls are examined by different microscopy techniques to assess the effect of the bacterial VOCs on the infection and the shape of the fungal structures. As a first step, the infected leaves (exposed and non-exposed to the bacterial VOCs) are observed under an optical microscope (Zeiss Axioscope 2 upright Light microscope). Then, they are subjected to Trypan blue staining: the leaves are soaked in Trypan blue solution [10 mL lactic acid, 10 mL phenol (10M), 10 mL glycerol, 10 mg Trypan blue] added to 2 volumes of absolute ethanol, and then boiled in water bath for 1 min. After that, the Trypan blue solution is removed with chloral hydrate solution (2.5 g ml⁻¹) overnight under shacking conditions. The leaves are then stored in glycerol (50%) then stored at 4°C to be subsequently observed under optic microscope (Zeiss Axioscope 2 upright Light microscope). The infected leaves are examined as well with a high resolution Scan Electron Microscopy (SEM) for further high resolution observations.

### Evaluation of bacterial VOCs effect on M. oryzae infection structures.

To evaluate the effect of bacterial VOCs on the specialized infection structures, dual petri dish containing a wet filter paper in one side and TSB agar medium on the other are used. Twenty µL of 10⁸ cells ml⁻¹ bacterial culture is inoculated on TSB and a plastic coverslip is placed on the side containing the wet filter paper. The petri dish is closed with Parafilm 'M' and incubated at 30°C. After 7 days a 50 µl drop of conidia (10 conidia µL⁻¹) is placed on the coverslip using a syringe without opening the petri dish. A small whole is made on the cover of the petri dish using a heated syringe needle. The conidia suspension is dropped off on a coverslip placed inside the petri dish using a micropipette throughout the whole. The whole was immediately closed with tape to avoid the dilution of VOCs. The plate is incubated at 26°C in the dark for 24-48 hours. The percentages of germinated conidia and appressoria are determined after 24 hours under the microscope. The percentage of germinated conidia is calculated by counting their number respect to the total number of conidia. The percentage of appressoria formed following conidia germination is determined by counting the number of germinated conidia-producing appressoria respect to the total number of conidia. All the experiments are performed three times.

**Expected outcomes:** The results of these experiments provide information about the response of *M. oryzae* to volatile bacterial metabolites and contribute to defining a potential new strategy to control the virulence of the cereal blast causal agent: an antagonistic activity mediated by bacterial VOCs that does not target pathogen growth but affect a secondary metabolism linked to melanin production. This study is also elucidating the composition of the involved bacterial VOCs and their effect on *M. oryzae* melanin production, infectivity and virulence.

**Preliminary results:** Three bacterial strains (B 10, B 16 and B 17) were selected for an initial screening to check for the ability to alter *M. oryzae* (strain BOA102) pigmentation. The phylogenetic affiliation was performed by 16S rRNA gene sequencing. Isolates have been assigned to two different species, namely *Citrobacter freundii* (B10 and B16) and *Enterobacter cloacae* (B17; Fig. 11/Table 1).

The ability of B10, B16 and B17 bacterial strains to modify the pigmentation of BOA102 has been further tested after the initial screening in different confirmation experiments (Figure 5A). After 7 days of exposure to the bacterial VOCs, the pigmentation (color) of the fungal mycelium is altered. As reported in Figure 5A, fungal mycelia exposed to bacterial VOCs (strains B10, B16 and B17) presented a whitish to greyish color compared to the negative control (*M. oryzae* exposed to water vapors) that maintained a black color. The fungus regained its initial black color once transferred and grown on new plates with fresh media in the absence of bacterial VOCs (Figure 5B). Tricyclazole has been used as positive control (Figure 5C). Strain BOA102 grown in the presence of Tricyclazole shows an orange color due to the inhibition of the DHN melanin biosynthetic pathway. Tricyclazole, a fungicide, inhibits the DHN pathway. The effect mediated by bacterial VOCs was on the pigmentation with an inhibition of the black color analogously to Tricyclazole. These first results prove that bacterial VOCs interfere with the melanin biosynthetic pathway. Additional analysis is ongoing to establish the metabolic step(s) of the melanin synthesis pathway affected by the bacterial VOCs.

The effect of bacterial VOCs on rice leaves healthiness is evaluated ahead of assessing their effect on the fungus virulence. Since no adverse effects are observed on rice leaves exposed to the bacterial VOCs, I proceeded with looking over the bacterial VOCs effect on BOA102 infection capacity. Leaves of the rice variety Carnaroli are infected and exposed to bacterial VOCs and agar medium vapors. After 7 days of incubations, rice leaves not exposed to bacterial VOCs show Blast disease symptoms consisting on elliptical shaped lesions with reddish-brown margins and grey-white centers (Figure 6 A, B and C, BOA102 infection). These lesions enlarge and coalesce to end up with killing the entire leaves (Figure 6 A, B and C, BOA102 infection). Such disease symptoms are not observed in the leaves exposed to the VOCs released by the three bacteria, where only the small blackish spots can be seen (Figure 6A, B and C, BOA102 infection+B10, +B16, +B17). *Escherichia coli* VOCs have also been used as an additional control. VOCs released by *E. coli* are not able to reduce the pathogenicity of BOA102: infection lesions appear both on the control and on the treated leaves surface (Figure 6D).

The ability of B10, B16 and B17 bacterial strains to modify the pigmentation of BOA102 has been further tested after the initial screening in different confirmation experiments (Figure 5A). After 7 days of exposure to the bacterial VOCs, the pigmentation (color) of the fungal mycelium is altered. As reported in Figure 5A, fungal mycelia exposed to bacterial VOCs (strains B10, B16 and B17) presented a whitish to greyish color compared to the negative control (*M. oryzae* exposed to water vapors) that maintained a black color. The fungus regained its initial black color once transferred and grown on new plates with fresh media in the absence of bacterial VOCs (Figure 5B). Tricyclazole has been used as positive control (Figure 5C). Strain BOA102 grown in the presence of Tricyclazole shows an orange color due to the inhibition of the DHN melanin biosynthetic pathway. Tricyclazole, a fungicide, inhibits the DHN pathway. The effect mediated by bacterial VOCs was on the pigmentation with an inhibition of the black color analogously to Tricyclazole. These first results prove that bacterial VOCs interfere with the melanin biosynthetic pathway. Additional analysis is ongoing to establish the metabolic step(s) of the melanin synthesis pathway affected by the bacterial VOCs.

The effect of bacterial VOCs on rice leaves healthiness is evaluated ahead of assessing their effect on the fungus virulence. Since no adverse effects are observed on rice leaves exposed to the bacterial VOCs, the next experiments involved evaluating the bacterial VOCs effect on BOA102 infection capacity. Leaves of the rice variety Carnaroli are infected and exposed to bacterial VOCs and agar medium vapors. After 7 days of incubations, rice leaves not exposed to bacterial VOCs show Blast disease symptoms consisting on elliptical shaped lesions with reddish-brown margins and grey-white centers (Figure 6 A, B and C, BOA102 infection). These lesions enlarge and coalesce to end up with killing the entire leaves (Figure 6 A, B and C, BOA102 infection). Such disease symptoms are not observed in the leaves exposed to the VOCs released by the three bacteria, where only the small blackish spots can be seen (Figure 6A, B and C, BOA102 infection+B10, +B16, +B17). *Escherichia coli* VOCs have also been used as an additional control. VOCs released by *E. coli* are not able to reduce the pathogenicity of BOA102: infection lesions appear both on the control and on the treated leaves surface (Figure 6D).

The surface of rice leaves has also been analyzed at the Scanning Electron Microscopy (SEM). SEM showed as well the typical teardrop shape of conidia that come out from the surface of the infected leaf not exposed to the bacterial VOCs (Figure 7C, top panel). Interestingly, in addition to the long hyphae produced by conidia under VOCs exposition, SEM evidences a shape modification of the conidia used for the infection on the surface of the leaves exposed to VOCs. The few conidia still attached to the leaf surface and present a wrinkly, turgid and dry external membrane (Figure 7C, bottom panel). These results prove that bacterial VOCs have a significant effect on the infection capacity of *M. oryzae* BOA102, modifying the conidia development and inhibiting the appressoria formation.

To characterize the composition of the VOCs released by the selected bacteria, different extraction methods have been used. Purge and Trap extraction system demonstrates that B10 strain produces a bend of ten VOCs including alcohols (ethanol, 1-propanol-2-methyl, 1-butanol-3-methyl, 1- butanol-2-methyl, phenylethyl-alcohol), ketones (acetone), sulfide-containing compounds (disulfide dimethyl, trisulfide dimethyl), phenols and carbon dioxide. For its higher sensitivity, SPME technique has also applied to enlarge the range of detectable molecules within the VOCs bouquet. A total of 53 molecules released by B10 - including the ten compounds identified using the Purge and Trap - are recognized by the GC-MS analysis (Figure 8A). The effect of four of these chemical compounds (ethanol, 1-propanol-2-methyl, 1-butanol-3-methyl and 1-butanol-3- methyl-acetate) has been investigated on BOA102 pigmentation (Figure 8B). While three of them do not induce appreciable phenotype/color variations in the fungal colony, 1-butanol-3-methyl affects the mycelium color inducing a shift from black to white comparable to that observed with the whole VOC blend (Figure 8B). A significant reduction of the mycelium growth measured as colony diameter (Student T-test *p* < 0.05) is observed in presence of 1-propanol-2-methyl, 1- butanol-3-methyl-acetate and 1-butanol-3-methyl. No effect on growth of the fungal mycelium exposed to ethanol is observed.

Further analysis will be conducted to i) characterize the molecules present in the VOCs bouquet of bacterial strains B16 and B17, ii) compare the volatile compounds released by the three strains and iii) evaluate the effect of the others identified compound (single and in combination) on fungal mycelium phenotype (pigmentation and growth).

### Example 2: Characterization of bacterial VOCs effects on the transcriptomic architecture of M. oryzae

**Introduction:** High-throughput sequencing technologies have markedly evolved to become an efficient tool producing millions of short sequence reads that can be applied to genomes, epigenomes and transcriptomes. While genome is fixed for a given cell line, the transcriptome reflects the genes that are being expressed but can vary with external environmental conditions (Wang et al. 2009). The transcriptome is the entire set of all transcripts (messenger RNA molecules) expressed in an organism in a given condition (Wolf 2013). Sequencing steady-state RNA, known as RNA-seq, provides a precise measurement of levels of transcripts and their isoforms. Understanding the transcriptome (qualitatively and quantitatively) is essential for interpreting the functional elements of the genome and revealing the molecular constituents of the organisms. The major purposes of transcriptomics is: (i) to catalogue all species of transcript, including mRNAs, non-coding RNAs and small RNAs, (ii) to determine the transcriptional structure of genes, in terms of their start sites, 5' and 3' ends, splicing patterns and other post-transcriptional modifications and (iii) to quantify the changing expression levels of each transcript during development and under different conditions (Wang et al. 2009).

Infection mechanism of *Magnaporthe oryzae* has been subjected to many transcriptomics study. It aimed to understand the genetic players that mediate fungal resistance (Rai et al. 2011; Ray et al. 2016), pathogenicity and host infection mechanism (Guo et al. 2010; Hof et al. 2007; Oh et al.

2008; Zhou et al. 2016), with particular interest for the transcript involved in the regulation of melanin biosynthesis (Guo et al. 2010). As discussed in the Introduction and Example 1, melanin is considered a key factor driving the *M. oryzae* infection capacity. As extensively demonstrated in the literature, the regulation of the melanin biosynthesis pathway represents an effective way to control this fungal disease (Chumley and Valent 1990; Kumar et al. 2015; Baek et al. 2014). Within the frame of this study, RNA-seq technology will be applied to compare the expressed/ not expressed gene sets in *M. oryzae* exposed or not to the bacterial VOCs. This analysis could provide a view of the variations in the virulence genes expression under different conditions of exposure to bacterial VOCs. These data will provide new information useful to describe the pathogenicity factors involved in the *M. oryzae* infection mechanism in relation to the exposure to bacterial VOCs.

In these experiments, we will identify the transcripts qualitatively and quantitatively modified by the exposure of *M. oryzae* to bacterial VOCs. In addition, we will identify the *M. oryzae* enzymes involved in the melanin synthesis that are affected by the exposure to bacterial VOCs.

**Hypotheses:** Preliminary results presented in Example 1 show that after exposure to bacterial VOCs *M. oryzae* regains its original black pigmentation when transferred on a fresh medium, indicating that the metabolism modification due to bacterial VOCs exposure is temporary and reversible. For that, it is hypothesized that no genetic but only transcriptional changes are involved in the control of *M. oryzae* infection mediated by bacterial VOCs. Since the fungus white-colony phenotype observed in the experiments is similar to the one obtained by inhibiting the biosynthetic pathway of melanin, as demonstrated by i) *M. oryzae* non-virulent albino mutants and ii) *M. oryzae* exposed to the pesticide Tricyclazole, it is hypothesized that also bacterial VOCs might interfere with the expression/activity of the enzyme 1,3,8-Trihydroxynaphtalene reductase or of other enzymatic steps involved in DHN melanin biosynthesis.

**Aims:** The aims of the experiments are as follows: 1. Comparative analysis of the gene expression profiles (metatranscriptomics) of *M. oryzae* i) not exposed to bacterial VOCs, ii) exposed to bacterial VOCs and iii) grown on new media after the exposure. 2. Identification of the transcripts influenced by the bacterial VOCs (qualitatively and quantitatively) in order to understand their role in the *M. oryzae* pathogenicity regulation.

### Materials and methods

### Fungal material, treatments and preparation for RNA extraction.

The transcriptomic study is conducted on the fungus *M. oryzae* BOA102 subjected to different treatments: i) not exposed to bacterial VOCs, ii) exposed to bacterial VOCs and iii) grown on fresh medium without VOCs after the initial exposure. Fungal growth on plate containing the fungicide Tricyclazole (10 µg µl⁻¹) is also used as a control condition. The material necessary for the extraction of RNA is obtained by the dual plate assay experiment, following the protocol described in Example 1 *'Role of bacterial volatile organic compounds (VOCs) in Magnaporthe oryzae control'* using the three selected strains B10, B16 and B17 and the fungicide Tricyclazole. The experiments are conducted in triplicates.

### RNA extraction and quality assessment.

100 mg of fungal mycelium collected from each treatment are placed in a two ml RNase-free tube, flash frozen in liquid nitrogen and ground thoroughly using a motor driven pestle (Sigma Aldrich). Total RNA (tRNA) is extracted from the fresh mycelium using Triazol reagent (Sigma Chemicals, St. Louis, MO) according to the manufacturer's protocol. For each treatment, the RNA is extracted from three biological replicates. The extracted RNA is purified using the RNeasy Plant Mini Kit (Qiagen Inc., Valencia, CA, USA) following the protocol described by Mathioni et al., (2013). RNA integrity and concentration is assessed by using the Tape Station 2200 (Agilent Technologies, Inc., Wilmington, DE, USA). Only RNA extracts with integrity number values > 8 are used for further analysis. A total of 1 µg of RNA from each biological replicate is pooled for RNA-seq library preparation.

### RNA-seq cDNA library preparation and sequencing.

cDNA library preparation is performed according to manufacturer's instructions for the TruSeq RNA Sample Prep Kit (www.illumina.com). Briefly, the poly-A containing mRNAs are purified by using poly-T oligo- attached magnetic beads and then fragmented. The first and second cDNA strands are synthesized, end repaired, and adaptors are ligated after adenylation at the 3'-ends. DNA fragments containing adaptors on both ends are selectively enriched by PCR amplification. The indexed Illumina SBS libraries are pooled into three different sample sets (each in a flow cell) for sequencing. Q-PCR is used to validate the Illumina SBS libraries in order to determine clustering concentration and fragment size, using the Agilent High-Sensitivity DNA chip on an Agilent Technologies 2100 Bioanalyzer (Oh et al. 2008). The samples are clustered and sequenced on an Illumina HiSeq 2000 sequencing system. The sequencing run is a 50-cycle single-read run, followed by a 7-cycle index read. Primary analysis and quality filtering of the Illumina HiSeq data are performed using the default parameters.

### RNA-seq data analysis.

The RNA-seq reads are mapped to the *M. oryzae* reference genome (Dean et al. 2005) by using Bowtie aligner. The alignment is performed considering the best alignment with zero mismatches. The abundance of reads per gene is calculated and the data are analyzed for differential gene expression using LOX (Level Of eXpression) as reported in Zhang et al. (2010). LOX employs Markov Chain Monte Carlo methods to assess the level of expression and integrates sequence count tallies that are assigned by total expressed sequence count to give expression levels for each gene relative to all treatments as well as Bayesian credible intervals. Area-proportional Venn diagrams are generated by using the BioVenn software. All the genes with *p* ≤ 0.01 are then further analyzed using functional databases (KEGG, GO).

**Expected outcomes:** The transcriptomic results will help to distinguish the fungal genes targeted by the bacterial VOCs, underlining the gene expression modification occurred due to the VOCs exposure. Basing on the outcomes of Example 1 and the data published in the literature, it might be expected that the 1,3,8- trihydroxynaphthalene reductase gene expression is down-regulated (or silenced) after the exposure of the fungus to the bacterial VOCs. Since the color change effect is reversible, I hypostasize that the expression of the involved genes regresses to the normal level when the fungus grows in absence of the bacterial VOCs. The modifications in the expression of other genes of the fungal metabolism can be verified as well with a metatranscriptomic approach.

**Preliminary results:** The color shifting from black to white of the *M. oryzae* mycelium exposed to B10, B16 and B17 bacterial VOCs has been confirmed (Figure 9A). Three biological replicates from this set are used for the RNA-seq analysis. The fungal total RNA is extracted and analyzed with Tape Station 2200 platform available in the BCL core lab. The low value of tRNA is recorded from all the samples: the gel electrophoresis shows a low intensity of the bands corresponding to 18S and 28S that explain the low amounts of the extracted tRNA (Figure 9B). Moreover, tRNAs run in the gel forming a smear lacking a fine band shape, indicating degradation of the extracted tRNA. Furthermore, the RNA Integrity Number equivalent (RIN^{e}) is lower than 8 for all the samples, confirming the low quality of the tRNA extracted. Thus, the tRNA extracted from this first trial cannot be used for further transcriptomic analysis. The RNA extraction will be repeated for all the treated fungal samples optimizing the RNA extraction protocol to i) meliorate tRNA integrity, ii) increase tRNA quantity starting from a larger quantity of mycelium and iii) improve tRNA quality by treating it with DNase.

### Example 3: Evaluation of bacterial VOCs anti-virulence potential on dark phytopathogenic fungi

**Introduction:** Global crop security is threatened by several dark-fungal-phytopathogens that use melanin as a virulence weapon against their plant hosts and cause dramatic losses in crop production (Vasanthakumar et al. 2015; Abbo 2012). As previously discussed herein, melanin is a high molecular weight secondary metabolite formed by phenolic compounds oxidative polymerization and known by its dark brown or black color (Scharf et al. 2014). Most fungal melanins are principally derived from the precursor molecule 1,8-dihydroxynaphthalene (DHN) and are known as DHN-melanins (Pal et al. 2014; Schumacher 2015). The functions of melanin are numerous. It exerts beneficial functions to the producing fungi due to its protective action against a wide variety of exogenous stresses (Gessler et al. 2014) as well as its key role in fungal infection ability (Schumacher 2015). Despite its significant role in fungal pathogenicity, melanin remains poorly characterized due to its complexity (insoluble, amorphous and not transformable to solution or crystallographic structure) and the lack of biochemical and biophysical techniques able to provide a clear and detailed chemical structure of this polymer (Nosanchuk and Casadevall 2003). Moreover, the melanin synthesis pathway, the host infection cycle and the role of melanin in fungal pathogenicity vary from one pathogen to another. In several fungal phytopathogens, such as *Collectorichum langenarium, C. lindemuthianum* and *M. oryzae,* melanin is accumulated in the cell wall of the appressoria, specialized cells formed from a newly deposited spore. This pigment reduces the porosity of the appressorium wall, enabling the fungal cell to retain glycerol which confers an osmotically generated turgor pressure and mechanical strength to the fungus to allow its penetration inside the host tissue (Howard and Ferrari 1989; Howard et al. 1991; Henson et al. 1999). Recently, it has been reported that melanin can also be involved in the formation of the multi-cellular conidia and in ensuring conidia integrity (Yu et al. 2015). Melanin can also act as an instrument to focus enzyme secretion, determine the direction of penetration and protect the same fungus, preventing diffusion of these enzymes into the cell wall space (Ludwig et al. 2014). All the available data demonstrate the multiple and variable functional roles of melanin among different fungi (Takano et al. 1997).

Within the frame of dark fungi control, the most efficient mechanism is the inhibition of melanin biosynthetic pathway. The most used fungicide acting in this way is the Tricyclazole. Throughout melanin synthesis inhibition, Tricyclazole is able to reduce the infection rate of several dark- phytopathogenic fungi, such as *M. oryzae* (Froyd et al. 1976), *C*. *lindemuthianum* (Wolkow et al. 1983), *Verticillium dahliae* (Tokousbalides and Sisler 1979), *V. tricorpus, V. nigrescens* (Ten et al. 1983) and *Bipolaris sorokiniana* (Kumar et al. 2015). The preliminary data obtained in Example 1 suggest that the bacterial VOCs are able to work in a similar way of Tricyclazole by inhibiting the appressoria melanization, consequently, they can reduce the infection rate of *M. oryzae.* Therefore, it would be interesting to understand if the action mechanism mediated by the studied bacterial VOCs is conserved among other dark-phytopathogen fungi. Knowing how broad the impact of bacterial VOCs on melanin-producing fungi is would allow for the description and characterization of a new possible mechanism of infection control mediated by microorganism naturally present in the environment.

The experiments will identify the effect of bacterial VOCs on dark-phytopathogenic-fungi requiring melanin biosynthesis to complete their infection. In addition, we will determine whether or not bacterial VOCs are able to modify the secondary metabolism of dark-phytopathogenic-fungi. Lastly, we will determine whether or not bacterial VOCs have an effect on the infection capacity of dark-phytopathogenic-fungi.

**Hypotheses:** Basing on the preliminary results obtained in Example 1, we hypothesize that the VOCs released by selected bacteria could reduce the virulence of other dark-phytopathogen fungi interfering with the melanin biosynthetic pathway. The confirmation of this hypothesis will allow for the design of a new mechanism of action to control virulence of pathogenic fungi that adopt melanin as the key factor for exerting virulence.

**Aims:** The aims of the experiments are as follows: 1.Establish a collection of dark-phytopathogenic-fungi from commercialized collections and environmental samples. 2. Evaluate bacterial VOCs effect on dark-phytopathogenic-fungi phenotype *in vitro.* 3.Evaluate bacterial VOCs effect on the dark-phytopathogenic-fungi infection capacity *in vivo.*

### Materials and methods

### Isolation, genotypic characterization and identification of dark-phytopathogenic-fungi.

A collection of dark-phytopathogenic-fungi is established by combining fungal strains obtained from i) DSMZ and other fungal collections and ii) isolated from environmental samples, in order to cover a higher number of phytopathogenic genera.

For the isolation of dark-fungi from environmental samples, one gram of smashed material is suspended in nine ml of sterile physiological solution (9 g L⁻¹ NaCl) and shaken for 15 min at 200 rpm at room temperature. The suspensions are diluted in a 10-fold series and plated onto potato dextrose agar (PDA) medium. After three days of incubation at 30°C, colonies with different black phenotypes are isolated and purified on fresh PDA medium. The pure fungal strains are stored in potato dextrose broth (PDB) supplemented with Glycerol (25%) at -80°C for subsequent use. DNA is extracted as described in Example 1 (*Phylogenetic identification of fungi and bacterial strains).* The fungal strains are identified by sequencing the ITS region amplified using the primers ITS1F (TCCGTAGGTGAACCTGCGG) and ITS4R (TCCTCCGCTTATTGATATGC) following the protocol described in White et al. (1990).

### Evaluation of bacterial VOC effect on dark-phytopathogenic-fungi growth, development and virulence.

The effect of the bacterial VOCs is tested on the selected dark-phytopathogenic-fungi using the dual plate assay following the same protocols described in Example 1. To evaluate the effect of the bacterial VOCs on the infection capacity, the *in vivo* assay outlined in Example 1 is used.

### Extraction and purification of melanin.

Intracellular melanin from 0.1 g mycelium is extracted and estimated according to the method described by (Bashyal et al. 2010). The OD₄₀₀ of the extract dissolved in NaOH is measured. Melanin content (µg g⁻¹ of mycelium) is determined as follows: melanin content (g L⁻¹) = OD₄₀₀ × 0.105 × N (N, diluent fold).

**Expected outcomes:** The results of this Example will reveal if the mechanism of action mediated by bacterial VOCs to reduce the virulence of *M. oryzae* could be active also against others dark-phytopathogen-fungi. If the hypothesis will be confirmed, the outcome will allow me to describe a new biocontrol mechanism that can be involved in counteracting dark-phytopathogenic-fungi by limiting their virulence.

**Preliminary results:** A collection of dark-fungi is obtained from environmental samples mainly soil, rotten fruits and vegetables. From the fungal collection, ten darkly pigmented strains are used for the further analysis. Data regarding isolation origin, phylogenetic affiliation and mycelium color are reported in Fig. 12 (Table 2). The phylogenetic affiliation shows that the selected strains belong to *Aspergillus, Cladosporium, Penicillium, Alternaria* and *Talaromyces* genera.

The genera present in the collection are known to host several phytopathogenic species, such as *Aspergillus hispanicus,* the causal agent of crown rot of guava (Valentino et al. 2015), *Alternaria arborescens,* the causal pathogen of tomato stem canker (Barkai-Golan and Paster 2008) and *Cladosporium sp.* the causal pathogen of pea plants infection (Rashid et al. 2013). Additional dark- phytopathogenic fungi will be ordered from DSMZ (Deutsche Sammlung von Mikroorganismen und Zellkulturen) and ATCC (American Type Culture Collection) and added to the collection to cover a broader range of dark-phytopatogenic-fungi.

The isolated dark-phytopathogenic-fungi are used as models to start the experiments necessary to confirm the hypothesis. First, the effect of bacterial VOCs on fungal color is evaluated. We started with three fungal strains: *A. japonicus, A. heteromorphus* and *T. purpureogenus.* The phenotype of the two fungi belonging to *Aspergillus* genus is affected by the bacterial VOCs. While a white mycelium is observed for both the *Aspergillus* strains grown in the presence of the bacterial strains B 10 (Figure 10Aand B), no modifications in the *Alternaria* phenotype are observed when exposed to the same VOCs (Figure 10C). Similar results have been obtained by exposing the fungal mycelium to VOCs released by the bacterial strains B16 and B17. Further experiments will be performed on the rest of the strains of the collection to evaluate the effect of bacterial VOCs on their pigmentation. The effect of bacterial VOCs on their infection capacity will also be assessed.

While specific embodiments have been described above with reference to the disclosed embodiments and examples, such embodiments are only illustrative and do not limit the scope of the invention. Changes and modifications can be made in accordance with ordinary skill in the art without departing from the invention in its broader aspects as defined in the following claims.

All publications, patents, and patent documents are incorporated by reference herein, as though individually incorporated by reference.

### REFERENCES

Abbo ASH (2012) The Dark Side of Fungal Melanin: Alternaria alternata as Example. Tropentag, Göttingen, Germany.
Ahmad MM, Ahmad M, Ali A, Hamid R, Javed S, Abdin MZ (2014) Annals of microbiology 64 (4):1597-1605.
Alff E (2012) The role of rice rhizobacteria in plant growth promotion and defense against Magnaporthe oryzae infection. University of Delaware.
Anderson SJ, Simmons HE, Munkvold GP (2015). Plant Disease 99 (12):1847-1852. doi:10.1094/PDIS-07-14-0776-RE.
Audrain B, Farag MA, Ryu C-M, Ghigo J-M (2015). FEMS Microbiol Rev 39:222-233.
Baek SH, Ahn JW, Nam SH, Yoon CS, Shin JC, Lee SH (2014) S-(-)-10,11-International Journal of Molecular Sciences 15 (7):12750-12763.
Bailly A, Groenhagen U, Schulz S, Geisler M, Eberl L, Weisskopf L (2014). The Plant Journal:n/a-n/a. doi:10.1111/tpj.12666.
Balint-Kurti P, Zwonitzer JC, Wisser RJ, Carson M, Oropeza-Rosas MA, Holland JB, Szalma SJ (2007). Genetics 176 (1):645-657.
Barkai-Golan R, Paster N (2008). World Mycotoxin Journal 1 (2):147-159. doi:doi: 10.3920/WMJ2008.x018.
Bashyal B, Chand R, Kushwaha C, Sen D, Prasad L, Joshi A (2010). World Journal of Microbiology and Biotechnology 26 (2):309-316.
Bektas Y, Eulgem T (2015). Frontiers in Plant Science 5 (804). doi:10.3389/fpls.2014.00804.
Bell AA, Wheeler MH (1986). Annual rev. of phytopathology 24 (1):411-451.
Beltrán-García MJ, Prado FM, Oliveira MS, Ortiz-Mendoza D, Scalfo AC, Pessoa Jr A, Medeiros MH, White JF, Di Mascio P (2014). PloS one 9 (3):e91616.
Beneduzi A, Ambrosini A, Passaglia LM (2012). Genetics and molecular biology 35 (4):1044- 1051.
Boyce KJ, McLauchlan A, Schreider L, Andrianopoulos A (2015). PLoS Pathog 11 (3):e1004790.
Butler MJ, Day AW (1998). Canadian Journal of Microbiology 44 (12):1115-1136.
Campos VP, Pinho RSCd, Freire ES (2010) Volatiles produced by interacting microorganisms potentially useful for the control of plant pathogens. Ciência e Agrotecnologia 34 (3):525-535.
Chalal M, Winkler JB, Gourrat K, Trouvelot S, Adrian M, Schnitzler J-P, Jamois F, Daire X (2015) Sesquiterpene volatile organic compounds (VOCs) are markers of elicitation by sulfated laminarine in grapevine. Frontiers in plant science 6.
Chattopadhyaya A, Kushwaha C, Chand R, Srivastava J (2013). Indian Phytopathol 66:155-158.
Chernin L, Toklikishvili N, Ovadis M, Khmel I (2013). Molecular Microbial Ecology of the Rhizosphere: Volume 1 & 2:791-800.
Chumley FG, Valent B (1990). Mol Plant-Microbe Interact 3:135-143.
Couch BC, Kohn LM (2002). Mycologia 94 (4):683-693.
D'Alessandro M, Erb M, Ton J, Brandenburg A, Karlen D, Zopfi J, Turlings TCJ (2014). Plant, Cell and Environment 37 (4):813-826.
de Oliveira Nascimento I, Rodrigues AAC, Moraes FH, de Sousa F, Arruda a, Corsi MCF, de Moraes Catarino A, eia (2016). African Journal of Agricultural Research 11 (19):1743-1749.
Dean R, Van Kan JAL, Pretorius ZA, Hammond-Kosack KE, Di Pietro A, Spanu PD, Rudd JJ, Dickman M, Kahmann R, Ellis J, Foster GD (2012) Molecular Plant Pathology,13 (4):414-430. doi:10.1111/j.1364- 3703.2011.00783.x.
Dean RA, et al.(2005). Nature 434 (7036):980- 986. doi:10.1038/nature03449.
Dijksterhuis J, Samson RA (2002). In:Agricultural Applications. Springer, pp 39-52.
Ebbole DJ (2008). Annual Review of Phytopathology, vol 45.
Edwards C (2013) Environmental pollution by pesticides, vol 3. Springer Science & Business Media.
Eisenman HC, Casadevall A (2012). Applied Microbiology and Biotechnology 93 (3):931-940. doi:10.1007/s00253-011-3777-2.
Elliott ML (1995). Mycologia:370-374.
Elsharkawy MM, Nakatani M, Nishimura M, Arakawa T, Shimizu M, Hyakumachi M (2015). Acta Agriculturae Scandinavica, Section B-Soil & Plant Science 65 (7):629-636.
Engh I, Nowrousian M, Kück U (2007). FEMS microbiology letters 275 (1):62-70.
FAO(2009)http://www.fao.org/fileadmin/templates/wsfs/docs/Issues_papers/ HLEF2050_Global _Agriculture.pdf.
FAOSTAT(2015)http://www.fao.org/fileadmin/templates/wsfs/docs/expert_p aper/How_to_Feed_the_World_in_2050.pdf.
Farag MA, Ryu C-M, Sumner LW, Paré PW (2006). Phytochemistry 67 (20):2262-2268. doi:http://dx.doi.org/10.1016/j.phytochem.2006.07.021.
Fernando WD, Ramarathnam R, Krishnamoorthy AS, Savchuk SC (2005). Soil Biology and Biochemistry 37 (5):955-964.
Figueiredo-Carvalho MHG, dos Santos FB, Nosanchuk JD, Zancope-Oliveira RM, Almeida-Paes R (2014). FEMS yeast research 14 (6):988-991.
Fisher MC, et al. (2012). Nature 484 (7393):186-194. doi:http://www.nature.com/nature/journal/v484/n7393/abs/nature10947.html#supplementary - information.
Földes T, Banhegyi I, Herpai Z, Varga L, Szigeti J (2000). Journal of Applied Microbiology 89 (5):840-846.
Fontaneto D (2011) Biogeography of microscopic organisms: is everything small everywhere? Cambridge University Press.
Freeman J, Ward E (2004). Molecular Plant Pathology 5 (4):235-252.
Froyd J, Paget C, Guse L, Dreikorn B, Pafford J (1976). Phytopathology 66 (1):135-131.
Fulton T, Ibrahim N, Losada M, Grzegorski D, Tkacz J (1999). Molecular and General Genetics MGG 262 (4-5):714-720.
Galhano R, Talbot NJ (2011). Fungal Biology Reviews 25 (1):61-67. doi:http://dx.doi.org/10.1016/j.fbr.2011.01.006.
Gessler NN, Egorova AS, Belozerskaya TA (2014). Applied Biochemistry and Microbiology 50 (2):105-113.
Gnanamanickam S (2009) Biological Control of Rice Blast. In: Biological Control of Rice Diseases, vol 8. Progress in Biological Control. Springer Netherlands, pp 53-65. doi:10.1007/978-90-481-2465-7_4.
Godfray HCJ, et al. (2010). Science: 327 (5967):812-818.
Gohel V, Singh A, Vimal M, Ashwini P, Chhatpar H (2006) Review-Bioprospecting and antifungal potential of chitinolytic microorganisms.
Guo M, et al. (2010). MPMI 23 (8):1053-1068. doi:10.1094/mpmi-23-8-1053.
Gutiérrez-Luna FM, et al. (2010). Symbiosis 51 (1):75-83.
Haas D, Defago G (2005). Nat Rev Micro 3 (4):307-319.
Hamada T, Asanagi M, Satozawa T, Araki N, Banba S, Higashimura N, Akase T, Hirase K (2014). Journal of Pesticide Science 39 (3).
Henson JM, Butler MJ, Day AW (1999). Ann. Rev, Phytopathol. 37:447-471.
Hernández-León R, Rojas-Solis D, Contreras-Pérez M, del Carmen Orozco-Mosqueda M, Macías- Rodriguez LI, Reyes-de la Cruz H, Valencia-Cantero E, Santoyo G (2015). Biological Control 81:83-92.
Hof C, Eisfeld K, Welzel KAI, Antelo L, Foster AJ, Anke H (2007). Molecular Plant Pathology 8 (2):163-172. doi:10.1111/j.1364-3703.2007.00380.x.
Hornby D (1998) Take-all disease of cereals: a regional perspective. Cab International.
Howard RJ, Ferrari MA (1989). Experimental Mycology13 (4):403-418.
Howard RJ, Ferrari MA, Roach DH, Money NP (1991). Proceedings of the National Academy of Sciences 88 (24):11281-11284.
Jansen M, Jarosch B, Schaffrath U (2007). Planta 225 (6):1381-1391. doi: 10.1007/s00425-006-0447-1.
Junker RR, Tholl D (2013). Journal of chemical ecology 39 (7):810-825.
Kai M, Haustein M, Molina F, Petri A, Scholz B, Piechulla B (2009). Applied Microbiology and Biotechnology 81 (6):1001-1012.
Kato H (2001) Rice blast disease - An introduction. Pesticide Outlook 12 (1):23-25.
Kazan K, Gardiner DM, Manners JM (2012). Molecular Plant Pathology 13 (4):399-413. doi:10.1111/j.1364-3703.2011.00762.x.
Kubo Y, Takano Y (2013). Journal of general plant pathology 79 (4):233-242.
Kumar M, Chand R, Dubey R, Shah K (2015). World Journal of Microbiology and Biotechnology 31 (1):23-35.
Kunova A, Pizzatti C, Cortesi P (2013). Pest management science 69 (2):278-284.
Langfelder K, Streibel M, Jahn B, Haase G, Brakhage AA (2003). Fungal Genetics and Biology 38 (2):143-158.
Liu W-W, Mu W, Zhu B-Y, Du Y-C, Liu F (2008). Agricultural Sciences in China 7 (9):1104-1114.
Ludwig N, et al.(2014). Molecular Plant- Microbe Interactions 27 (4):315-327
Lugtenberg B, Kamilova F (2009). Annual review of microbiology 63:541-556.
Maciel JLN, et al. Phytopathology 104 (1):95-107. doi:10.1094/PHYTO-11-12-0294-R.
Maeda K, Houjyou Y, Komatsu T, Hori H, Kodaira T, Ishikawa A (2009). Molecular Plant-Microbe Interactions 22 (11):1331-1340. doi:10.1094/MPMI-22-11-1331.
Marasco R, et al. (2012) PLoS One 7(10):e48479.
Marcel S, et al. (2010). The Plant Cell Online 22 (9):3177-3187.
Martin-Urdiroz M, Oses-Ruiz M, Ryder LS, Talbot NJ (2016). Fungal Genetics and Biology 90:61-68. doi:http://dx.doi.org/10.1016/j.fgb.2015.12.009.
Mathioni SM, et al. (2013). PLoS ONE 8 (10). doi:10.1371/journal.pone.0076487.
Motoyama T, Yamaguchi I (2003) Fungicides, melanin biosynthesis inhibitors. Encyclopedia of agrochemicals.
Nicolaus RA, Piattelli M, Fattorusso E (1964) The structure of melanins and melanogenesis-IV: On some natural melanins. Tetrahedron 20 (5):1163-1172.
Nosanchuk JD, Casadevall A (2003). Cellular microbiology 5 (4):203-223.
Oerke E-C (2006). The Journal of Agr Sci 144 (01):31-43.
Oh Y, Donofrio N, Pan H, Coughlan S, Brown D, Meng S, Mitchell T, Dean R (2008). Genome Biology 9 (5):R85.
Ohtaka N, Kawamata H, Narisawa K (2008). Journal of General Plant Pathology 74 (2):101-108. doi:10.1007/s10327-007-0063-3.
Oliveri C, Bella P, Tessitori M, Catara V, La Rosa R (2016). Journal of the Science of Food and Agriculture:n/a-n/a. doi:10.1002/jsfa.7683.
Pal AK, Gajjar DU, Vasavada AR (2014). Medical Mycology 52 (1):10-18.
Park J-Y, Jin J, Lee Y-W, Kang S, Lee Y-H (2009). Plant physiology149 (1):474-486.
Parker D, et al. (2008). Nat Protocols 3 (3):435-445.
Peterson SW, Pérez J, Vega FE, Infante F (2003). Mycologia 95 (1):141-147.
Pieterse CM, et al. (2014). Annu Rev Phytopathol 52:347-375. doi:10.1146/annurev-phyto-082712-102340.
Pii Y, et al. (2015). Biology and Fertility of Soils 51 (4):403-415.
Rai AK, Kumar SP, Gupta SK, Gautam N, Singh NK, Sharma TR (2011). J Plant Biochemistry and Biotechnology 20 (1):55-65. doi:10.1007/s13562-010-0026-1.
Rashid A, Iram S, Ahmad I (2013). International Journal of Agronomy and Plant Production 4 (Special Issue):3485-3488.
Ray DK, Mueller ND, West PC, Foley JA (2013). PloS one 8 (6):e66428.
Ray S, Singh PK, Gupta DK, Mahato AK, Sarkar C, Rathour R, Singh NK, Sharma TR (2016) Frontiers in Plant Science 7:1140.
Ribot C, et al. (2008). Journal of Plant Physiology 165 (1):114-124. doi:http://dx.doi.org/10.1016/j.jplph.2007.06.013.
Ryder LS, Talbot NJ (2015). Current opinion in plant biology 26:8-13.\
Ryu CM, Farag MA, Hu CH, Reddy MS, Kloepper JW, Pare PW (2004). Plant Physiol 134 (3):1017-1026. doi:10.1104/pp.103.026583.
Ryu C-M, Farag MA, Hu C-H, Reddy MS, Wei H-X, Paré PW, Kloepper JW (2003). Proceedings of the National Academy of Sciences 100 (8):4927-4932. doi:10.1073/pnas.0730845100.
Sakthivel N, Gnanamanickam SS (1989). Agriculture, Ecosystems & Environment 25 (4):287-298. doi:http://dx.doi.org/10.1016/0167-8809(89)90126-6.
Saleh D, Milazzo J, Adreit H, Fournier E, Tharreau D (2014). New Phytologist 201 (4):1440-1456.
Satish S, Mohana D, Ranhavendra M, Raveesha K (2007). An International Journal of Agricultural Technology 3 (1):109-119.
Scharf DH, Heinekamp T, Brakhage AA (2014). PLoS Pathog 10 (1):e1003859.
Schulz S, Dickschat JS (2007). Natural Product Reports 24 (4):814-842.
Schumacher J (2015) DHN melanin biosynthesis in the plant pathogenic fungus Botrytis cinerea is based on two developmentally regulated key enzyme (PKS)-encoding genes. Molecular microbiology.
Schürch S (2016) .Agrarforschung Schweiz 7 (2):64-71.
Sesma A, Osbourn AE (2004). Nature 431 (7008):582-586.
Serra R, et al. (2006). Mycologia 98 (2):295-306.
Sharma R (2012). Cibtech journal of microbiology 1 (1):47-51.
Sisler HD (1986). Crop Protection 5 (5):306-313. doi:http://dx.doi.org/10.1016/0261-2194(86)90108-0.
Skamnioti P, Gurr SJ (2009). Trends in Biotechnology 27 (3):141-150. doi:http://dx.doi.org/10.1016/j.tibtech.2008.12.002.
Smith KF, Sax DF, Lafferty KD (2006). Conservation Biology 20 (5):1349-1357.
Song F, Goodman RM (2001). Physiological and Molecular Plant Pathology 59 (1):1-11.
Spence C, et al. (2014). BMC Plant Biology 14 (1):130.
Takano Y, et al. (1997). Fungal Genetics and Biology 21 (1):131-140.
Takatsuji H (2014). Frontiers in Plant Science 5 (November):1-12.
Talbot NJ (2003). Annu Rev Microbiol 57:177-202.
Ten LN, Stepanichenko NN, Mukhamedzhanov SZ, Khotyanovich AV (1983). Chemistry of Natural Compounds 19 (3):384-385. doi:10.1007/BF00579801.
Tendulkar SR, et al. (2007). Journal of Applied Microbiology 103 (6):2331-2339.
Tokousbalides MC, Sisler HD (1979). Pesticide Biochemistry and Physiology 11 (1):64-73. doi:http://dx.doi.org/10.1016/0048-3575(79)90048-8.
Troncoso-Rojas R, Tiznado-Hernández ME (2014) Alternaria alternata (Black Rot, Black Spot). Postharvest Decay: Control Strategies:147.
Tsai H-F, Wheeler MH, Chang YC, Kwon-Chung K (1999). Journal of Bacteriology 181 (20):6469-6477.
Tyc O, Zweers H, de Boer W, Garbeva P (2015) Volatiles in Inter-Specific Bacterial Interactions. Frontiers in microbiology 6.
USDA-ERS (2012) United States Department of Agriculture-Economic Research Service http://www.ers.usda.gov/topics/crops/rice/background.
Valasubramanian R (1994) Biological control of rice blast with Pseudomonas fluorescens Migula: role of antifungal antibiotics in disease suppression. Ph. D dissertation, University of Madras.
Valentino M, Pineda F, Fandialan M (2015) Phytopathogenicity of fungi associated with crown rot of Guava (Psidium guajava).
Van Loon L, Bakker P, Pieterse C (1998). Annual review of phytopathology 36 (1):453-483.
Vasanthakumar A, et al. (2015). Microbiology 161 (6):1211-1218. doi:doi:10.1099/mic.0.000030.
Vespermann A, Kai M, Piechulla B (2007). Applied and environmental microbiology 73 (17):5639-5641.
Vidal-Cros A, Viviani F, Labesse G, Boccara M, Gaudry M (1994). European Journal of Biochemistry 219 (3):985-992.
Wang X, Lee S, Wang J, Ma J, Bianco T, Jia Y (2014) Current advances on genetic resistance to rice blast disease.
Wang Z, Gerstein M, Snyder M (2009). Nature reviews genetics 10 (1):57-63.
Watanabe A, et al. (2000). FEMS microbiology letters 192 (1):39-44.
Weisskopf L (2013) The potential of bacterial volatiles for crop protection against phytophathogenic fungi.
Wheatley R (2002) The consequences of volatile organic compound mediated bacterial and fungal interactions. Antonie Van Leeuwenhoek 81 (1-4):357-364.
Whipps JM, Lumsden RD (2001) Commercial use of fungi as plant disease biological control agents: status and prospects. Fungal biocontrol agents: progress, problems and potential:9-22.
White TJ, Bruns T, Lee S, Taylor J (1990) Amplification and direct sequencing of fungal ribosomal RNA genes for phylogenetics. PCR protocols: a guide to methods and applications 18 (1):315-322.
Wilson RA, Talbot NJ (2009). Nat Rev Micro 7 (3):185-195.
Winter M, Koopmann B (2016). European Journal of Plant Pathology:1-13.
Wolf JB (2013). Molecular ecology resources 13 (4):559-572.
Wolkow PM, Sisler HD, Vigil EL (1983). Physiological Plant Pathology 23 (1):55-71. doi:http://dx.doi.org/10.1016/0048-4059(83)90034-6.
Woloshuk C, Sisler H, Vigil E (1983). Physiological Plant Pathology 22 (2):245IN217-259IN221.
Xiao J, Tsuda M, Doke N, Nishimura S (1991). Phytopathology 81 (1):58-64.
Yu X, Huo L, Liu H, Chen L, Wang Y, Zhu X (2015). Microbiological research 179:1-11.
Zeigler RS, Leong SA, Teng PS (1994) Rice blast disease. Int. Rice Res. Inst.
Zhang H, Wu Z, Wang C, Li Y, Xu JR (2014) Germination and infectivity of microconidia in the rice blast fungus Magnaporthe oryzae. Nature Communications 5.
Zhang Z, López-Giráldez F, Townsend JP (2010). Bioinformatics 26 (15): 1918-1919.
Zhao L-j, Yang X-n, Li X-y, Mu W, Liu F (2011). Agricultural Sciences in China 10 (5):728-736. doi:http://dx.doi.org/10.1016/51671-2927(11)60056-4.
Zheng C, Ji B, Zhang J, Zhang F, Bever JD (2015). New Phytologist 205 (1):361-368.
Zhou Z, Pang Z, Li G, Lin C, Wang J, Lv Q, He C, Zhu L (2016). Molecular Plant Pathology:n/a-n/a. doi:10.1111/mpp.12357.
Zhu Y-Y, Chen H-R, Fan J-H, Wang Y-Y, Li Y, Fan J-X, Yang S-S, Ma G-L, Chen J-B, Li Z-S (2003). Agricultural Sciences in China 2 (4):400-408.

### CLAUSES

The present invention may also be characterized by the following clauses:
Clause 1: A composition comprising an amount of one or more bacteria-derived volatile organic compounds or a commercial equivalent thereof, and an amount of an agriculturally acceptable carrier.
Clause 2: The composition of clause 1, wherein the one or more volatile organic compounds are derived from bacteria of the *Citrobacter* genus, the *Enterobacter* genus, or a combination thereof.
Clause 3: The composition of clauses 1 or 2, wherein the bacteria are of the *Citrobacter freundii* species or the *Enterobacter cloacae* species.
Clause 4: The composition of any of clauses 1-3, wherein the one or more volatile organic compounds are selected form the group consisting of 1-propanol-2-methyl, 1-butanol-3-methyl, 1-butanol-3-methyl acetate, a bacterial volatile organic compound commercial equivalent of 1-propanol-2-methyl, a bacterial volatile organic compound commercial equivalent of 1-butanol-3-methyl, and a bacterial volatile organic compound commercial equivalent of 1-butanol-3-methyl acetate.
Clause 5: The composition of any of clauses 1-4, wherein the one or more volatile organic compounds are selected from the group consisting of 1-butanol-3-methyl, a bacterial volatile organic compound commercial equivalent of 1-butanol-3-methyl, and a combination thereof.
Clause 6: A method of inhibiting melanin biosynthesis in phytopathogenic fungi, comprising exposing phytopathogenic fungi to an effective amount of one or more volatile organic compounds, wherein the synthesis of melanin in phytopathogenic fungi exposed to the one or more volatile organic compounds is decreased relative to the synthesis of melanin in phytopathogenic fungi not exposed to the one or more volatile organic compounds.
Clause 7: A method of suppressing fungal infection in plants, comprising treating the plants with an effective amount of one or more volatile organic compounds, wherein the plant is also exposed to one of more phytopathogenic fungi, wherein said treatment of volatile organic compounds suppresses the virulence of said fungi in said plants.
Clause 8: The method of clauses 6 or 7, wherein the fungi are selected from the group consisting of the genus *Magnaporte,* the genus *Colletotrichum,* the genus *Verticillium,* and the genus *Bipolaris.*
Clause 9: The method of any of clauses 6-8, wherein the fungi are selected from the group consisting of *Magnaporte oryzae, Colletotrichum lindemuthianum, Verticillium dahlia, Verticillium tricorpus, Verticillium nigrescens* and *Bipolaris sorokiniana*
Clause 10: The method of any of clauses 6-9, wherein the volatile organic compounds are produced in bacteria, are synthetic equivalents to the volatile organic compounds produced in bacteria, or are a combination thereof.
Clause 11: The method of any of clauses 6-10, wherein the one or more volatile organic compounds are derived from bacteria of the *Citrobacter* genus, the *Enterobacter* genus, or a combination thereof.
Clause 12: The method of any of clauses 6-11, wherein the one or more volatile organic compounds are derived from *Citrobacter freundii* species, the *Enterobacter cloacae* species, or a combination thereof.
Clause 13: The method of clause 7, wherein the infection is rice blast disease.
Clause 14: The method of clause 7, wherein the plant is of the *Oryza* genus.
Clause 15: The method of any of clauses 6-14, wherein the volatile organic compounds are selected from the group consisting of 1-propanol-2-methyl, 1-butanol-3-methyl, 1-butanol-3-methyl acetate, a bacterial volatile organic compound commercial equivalent of 1-propanol-2-methyl, a bacterial volatile organic compound commercial equivalent of 1-butanol-3-methyl, a bacterial volatile organic compound commercial equivalent of 1-butanol-3-methyl acetate, and a combination thereof.
Clause 16: The method of any of clauses 6-15, wherein one or more volatile organic compounds are selected from the group consisting of 1-butanol-3-methyl, a bacterial volatile organic compound commercial equivalent of 1-butanol-3-methyl, and a combination thereof.
Clause 17: A method of inhibiting melanin biosynthesis in phytopathogenic fungi, comprising exposing phytopathogenic fungi to an effective amount of the a composition comprising an amount of one or more bacteria-derived volatile organic compounds or a commercial equivalent thereof, and an amount of an agriculturally acceptable carrier of any of clauses 1-5, wherein the synthesis of melanin in phytopathogenic fungi exposed to the one or more volatile organic compounds is decreased relative to the synthesis of melanin in phytopathogenic fungi not exposed to the one or more volatile organic compounds, wherein the one or more bacteria-derived volatile organic compounds or commercial equivalent thereof includes 1-butanol-3-methyl.
Clause 18: A method of suppressing fungal infection in plants, comprising treating the plants with an effective amount of the a composition comprising an amount of one or more bacteria-derived volatile organic compounds or a commercial equivalent thereof, and an amount of an agriculturally acceptable carrier of any of clauses 1-5, wherein the plant is also exposed to one of more phytopathogenic fungi, wherein said treatment of volatile organic compounds suppresses the virulence of said fungi in said plants, wherein the one or more bacteria-derived volatile organic compounds or commercial equivalent thereof are selected from the group constating of 1-propanol-2-methyl, 1-butanol-3-methyl-acetate and l-butanol-3-methyl.
Clause 19: The method of clause 7, wherein the exposure to the one or more volatile organic compounds suppresses the development of the conidia in the fungi.
Clause 20: The method of clause 7, wherein the exposure to the one or more volatile organic compounds suppresses the formation of appressoria in the fungi.

## Claims

1. A composition comprising of one or more of a culture of an isolated Citrobacter strain and Enterobacter strain, wherein the said strain is capable of:
(a) producing at least one volatile compound selected from the group comprising:
acetic acid esters, ketones, alcohol, phenol, styrene, organosulphur
and
(b) producing one or more products that possess fungicidal activity.

2. The composition according to claim 1, wherein the culture is a substantially pure culture.

3. The composition according to claims 1-2, wherein said Citrobacter strain is *Citrobacter freundii* strain B10 (Accession No. KP224274) or *Citrobacter freundii* strain B16 (Accession No. KU570296) and the Enterobacter strain is *Enterobacter cloacae* strain B17 (Accession No. KU570360)

4. The composition according to claims 1-3, further comprising an agriculturally acceptable carrier.

5. The composition according to claims 1-4, wherein the isolated Citrobacter strain is further capable of producing at least one of 2-methyl-1- propanol, 3-methyl-1-butanol, 3-methyl-1-butyl acetate.

6. A composition comprising isolated cultures of a combination of Citrobacter and Enterobacter strains capable of producing one or more volatile organic compounds that possess fungicidal activity.

7. A composition having fungicidal activity comprising:
Carbon dioxide
methanthiol
ethanol
propan-1-ol
Butan-2-one
2-methylpropan-1-ol
Pentan-2-one
1-Mercapto-2-propanone
isoamyialcohol
2-methylbutan-1-ol
(Methyldisulfanyl)methane
methyl 2-metliylbutanoate
2-methylpyrazine
S-methyl butanoate
3-methylbutanoic acid
3-methylbutyl acetate
Heptan-2-one
styrene
benzenecarbothioic S-acid
1-(furan-2-yl)ethanone
pentyl butanoate
oxoisft-2-one
(methyltrisulfanyl)methane
Phenol
2-(1-adamantyl)ethyl 2-phenylacetate
2-phenylacetaldehyde
3-hydroxy-6-nitro-3-phenacyl-1,4-dihydroquinolin-2-one
4-methylphenol
2-Phenylethan-1-ol
fluoromethyl-dimethyl-phenylsilane
dimethyl(phenyl)silane
1-Monolinoleoylglycerol trimethylsilyl ether
(3*R*,5*S*,8*S*,9*S*,10*S*,13*S*,14*S*,17*E*)-10,13-dimethyl-17-phenylmethoxyimino-3-trimethylsilyloxy-2,3,4,5,6,7,8,9,12,14,15,16-dodecahydro-1*H-*cyclopenta[a]phenanthren-11-one

8. A composition having fungicidal activity comprising:
Carbon dioxide
Methanthiol
Ethanol
(Methylsulfanyl)methane
Butan-2-one
2-methylpropan-1-ol
Ethyl propanoate
4-methyl-1,3-dioxolan-2-one
(2S)-2-methylbutan-1-ol
Isoamylialcohol
(Methyldisulfanyl)methane
methyl 2-methylbutanoate
Ethyl butanoate
1,3-bis(trimethylsilyloxy)propan-2yl(9E,12E,15E)-octadeca
9,12,15-trienoate
4-methylpyrimidine
2-methylpyrazine
S-methyl butanoate
3-methylbutanoic acid
3-methylbutyl acetate
Heptan-2-one
benzenecarbothioic S-acid
S-Methyl 3-methylbutanethioate
3-methylbutyl propanoate
1-(1-methoxyethoxy)pentane
2-bromooctadecanal
Oct-1-en-3-ol
5-methylheptan-3-one
3-methylbutyl 2-methylpropanoate
(2-phenyl-1,3-dioxolan-4-yl)methyl(*E*)-octadec-9-enoate
phenol
3-Ethyl-2,5-dimethylpyrazine
3R,5S,8S,9S,10S,13S,14S,17E)-10,13-dimethyl-17-phenylmethoxyimino-3-trimethylsilyloxy-2,3,4,5,6,7,8,9,12,14,15,16-dodecahydro-1H-cyclopenta[a]phenanthren-11-one
3-methylbutyl 2-methylpropanoate
(2*S*)-4-[[(2*S*,3*S*,4*S*,5*R*,6*S*)-4,5-dihydroxy-6-(hydroxymethyl)-2-methoxyoxan-3-yl]amino]-4-oxo-2-(phenylmethoxycarbonylamino)butanoic acid
2-phenylacetaldehyde
1-methoxy-2-methyl-4-methylsulfanylbenzene
Benzene
(methyldisulfanyl)-methylsulfanylmethane
Undecan-2-one
1H-indole

9. A composition having fungicidal activity comprising:
2-(aztridin-1-yl)ethanamine
Methanethiol
(3E)-penta-1,3-diene
Butane-2,3-dione
3-Methyl-2-butanone
Butan-2-one
2-methylpropan-1-ol
1-methoxy-3-methylbutane
Pentan-2-one
2-ethoxy-9-methyl-1,5-dioxonane
2-(2-butoxyethoxy)ethyl thiocyanate
isoamylialcohol
(Methyldisulfanyl)methane
(2*R*,3*R*)-butane-2,3-diol
3-methylheptan-2-ol
2-methylpyrazine
4-methylhexan-2-ol
2-methylhexanoic acid
Heptan-2-one
Styrene
3-methylbutyl propanoate
4-methyl-2-oxopentanoic acid
(2R)-2-hydroxy-4-methylpentanoic acid
(2-hydroxy-3-octadecoxypropyl) octadecanoate
3-ethenyl-2-phenylheptan-2-ol
Phenol
6-decylsulfonylhexane-1,2,3,4,5-pentol
3-methylbutyl 3-methylbutanoate
Undecan-2-one
IH-indole
3-ethyl-2,5-dimethylpyrazine
4-methyl-1,3-dioxolan-2-one
Methoxy(n-pentyloxy)methylsilane
(2S)-2-methylbutan-1-ol

10. A composition having fungicidal activity comprising: 2-butanone, 2-heptanone, 2-methyl-1 propanol, 3-methyl-1-butanol, 2-methyl-1-butanol, methanethiol, phenol, styrene.

11. A composition having fungicidal activity comprising 3-methyl-1-butanol.

12. The compositions according to claims 1-11, wherein the composition inhibits melanin biosynthesis in the phytopathogenic fungi.

13. A method of modulating phytopathogenic fungal infection in a plant comprising exposing the plant or the seeds thereof to an effective amount of the composition of claims 1-12.

14. The method according to claims 13, wherein the phytopathogenic fungus is a member of the genus *Magnaporte,* the genus *Colletotrichum,* the genus *Verticillium,* or the genus *Bipolaris,* preferably selected from the group consisting of *Magnaporte oryzae, Colletotrichum lindemuthianum, Verticillium dahlia, Verticillium tricorpus, Verticillium nigrescens* and *Bipolaris sorokiniana.*

15. An artificial mixture having fungicidal activity, the mixture comprising one or more of:2-methyl-1-propanol, 1-butanol-3-methyl acetate, 3-methyl-1-butanol, phenol, styrene, dimethyl disulphide, and optionally at least one of a carrier and diluent.

16. A method for modulating phytopathogenic fungal infection in a plant comprising exposing the plant or the seeds thereof, to an amount of the artificial mixture of claim 15 effective to modulate the fungal infection.

17. The method according to claims 13-16, wherein the exposure to the effective amount of composition of claims 1-12 suppresses the development of conidia in the phytopathogenic fungi.

18. The method according to claims 13-16, wherein the exposure to the effective amount of composition claims 1-12 suppresses the formation of appressoria in the phytopathogenic fungi.

19. Use of the composition having fungicidal activity according to claims 1-12 and claim 15 on agricultural crops, during the storage of crops for preservation and in facilities.
